(19) Europäisches Patentamt
European Patent Office
Office européen des brevets

(11) EP 3 046 213 A1

(12) **EUROPEAN PATENT APPLICATION**
published in accordance with Art. 153(4) EPC

(43) Date of publication:
**20.07.2016 Bulletin 2016/29**

(21) Application number: **13892930.2**

(22) Date of filing: **09.09.2013**

(51) Int Cl.:
***H02J 7/35*** *(2006.01)*

(86) International application number:
**PCT/JP2013/074212**

(87) International publication number:
**WO 2015/033461 (12.03.2015 Gazette 2015/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Fujitsu Limited**
**Kawasaki-shi, Kanagawa 211-8588 (JP)**

(72) Inventors:
- **TANIGUCHI, Tsuyoshi**
  **Kawasaki-shi**
  **Kanagawa 211-8588 (JP)**
- **NAKAO, Yoshio**
  **Kawasaki-shi**
  **Kanagawa 211-8588 (JP)**

(74) Representative: **Cooper-Rolfe, Elizabeth Louise**
**Haseltine Lake LLP**
**Lincoln House, 5th Floor**
**300 High Holborn**
**London WC1V 7JH (GB)**

(54) **OPERATION PLAN CREATING DEVICE, OPERATION PLAN CREATING METHOD, OPERATION PLAN CREATING PROGRAM, AND STORAGE BATTERY SYSTEM**

(57) An operation schedule generating apparatus generates an operation schedule for controlling a storage battery to discharge electricity when a shortfall in power supply by photovoltaic power generation exceeds a threshold. The operation schedule generating apparatus obtains solar radiation information and a remaining charge of the storage battery; detects a change in the solar radiation information within a predetermined time period preceding a current time; obtains a first candidate corresponding to a first time when the change in the solar radiation information is detected and first solar radiation information and the remaining charge of the storage battery at the first time, and a second threshold candidate corresponding to second solar radiation information and the remaining charge of the storage battery at a second time preceding the first time by the predetermined time period or more, from a storage storing each threshold candidate in association with the remaining charge of the storage battery, the solar radiation information, and a time; selects one of the first candidate and the second candidate, and adjusts the operation schedule based on the selected threshold.

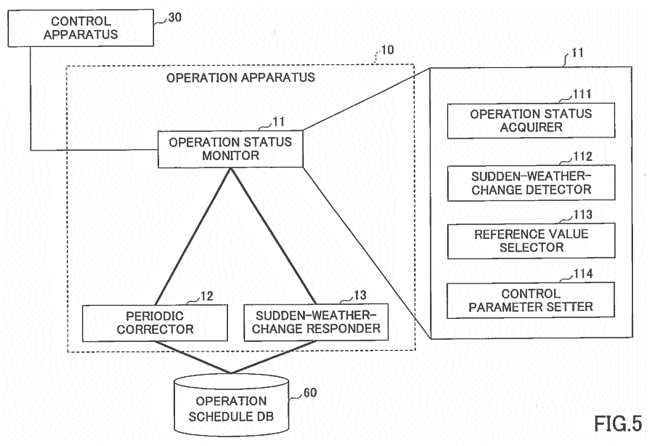


FIG.5

EP 3 046 213 A1

**Description**

TECHNICAL FIELD

The present invention relates to an operation schedule generating apparatus, an operation schedule generating method, an operation schedule generating program, and a storage battery system.

BACKGROUND ART

Photovoltaic power generation is a technology for generating power using natural energy. Because photovoltaic power generation is susceptible to weather and its power supply is unstable, it is necessary to devise a method to effectively use Photovoltaic power generation. One way to cope with variation in power supply by photovoltaic power generation is to operate different types of distributed power sources such as a storage battery and a fuel cell according to an operation schedule created based on power supply-and-demand forecasts. However, because it is difficult to forecast the power supply by photovoltaic power generation, the distributed power sources cannot always be operated according to the operation schedule.

For example, there exists a method (which is hereafter referred to as a "peak-cut control method") where photovoltaic power generation and a storage battery are used in combination to reduce (or cut) peaks of the shortfall (which is hereafter referred to as a "power shortfall") in the power supply by the photovoltaic power generation with respect to a power demand, and thereby achieve load leveling.

FIG. 1 is a drawing used to describe the peak-cut control method. In FIG. 1, the horizontal axis indicates time and the vertical axis indicates a power level. Also in FIG. 1, a solid line indicates changes in the power shortfall, and a dotted line indicates peaks of the power shortfall cut by the peak-cut control method.

In the peak-cut control method, when the power shortfall exceeds a predetermined discharge reference value, electricity is discharged from the storage battery to control the power shortfall to be less than or equal to the discharge reference value. Accordingly, peaks can be lowered by setting the discharge reference value at a low value. However, because the capacity of the storage battery is limited, simply setting the discharge reference value at a low value may result in a shortage of the remaining charge of the storage battery during operation. Therefore, the discharge reference value needs to be set at an appropriate value. For this purpose, the discharge reference value is set based on, for example, weather forecasted on a previous day or a few hours ago.

However, when the weather deteriorates unexpectedly and the power supply by the photovoltaic power generation becomes less than expected, it is necessary to increase the amount of discharge from the storage battery to achieve a peak cut as planned. Because this indicates an unexpected increase in the amount of discharge from the storage battery, the remaining charge of the storage battery may become insufficient during the operation. When a peak of the power shortfall occurs after the remaining charge of the storage battery becomes insufficient, it is difficult to cut the peak.

To reduce the possibility of such a problem, the discharge reference value may be corrected as needed during the operation. For example, there exist some methods whose effects have been confirmed in experiments and in which a discharge reference value set based on a weather forecast made on a previous day or a few hours ago is corrected based on a more accurate weather forecast made on the current day or at the current time when the weather forecast made on the previous day or a few hours ago is found out to be incorrect. Even when a forecast made on a previous day or a few hours ago is incorrect, it is possible to reduce an unexpected increase in the amount of discharge from a storage battery by appropriately correcting a discharge reference value based on a more accurate forecast.

[Related-Art Documents]

[Patent Documents]

[Patent Document 1] Japanese Laid-Open Patent Publication No. H08-308104
[Patent Document 2] Japanese Laid-Open Patent Publication No. 2013-005630
[Patent Document 3] Japanese Laid-Open Patent Publication No. 2002-369407

[Non-Patent Documents]

[Non-Patent Document 1] Mitsuru Kudo, Akira Takeuchi, Yousuke Nozaki, Hisahito Endo, Jiro Sumita, "Forecasting Electric Power Generation of Photovoltaic Power System for Energy Network", IEEJ Transactions on Power and Energy Vol. 127 (2007), No. 7, pp. 847-853 [Non-Patent Document 2] Satoshi Takayama, Yuji Iwasaka, Ryoichi Hara, Hiroyuki Kita, Takamitsu Ito, Yoshinobu Ueda, Shuya Miwa, Naoya Matsuno, Katsuyuki Takitani, Koji Yamaguchi, "A Study on the Scheduling of Large-Scaled PV Power Station Output based on Solar Radiation Forecast", IEEJ Transactions on Power and Energy Vol. 129 (2009), No. 12, pp. 1514-1521

DISCLOSURE OF INVENTION

PROBLEM TO BE SOLVED BY INVENTION

However, when information used to correct a discharge reference value indicates a temporary change in terms of the entire operation of the day, the discharge reference value may be inappropriately corrected with respect to weather changes after the correction.

For example, when the weather improves, the power supply by the photovoltaic power generation may increase and the power shortfall may decrease. In this case, the discharge reference value can be set at a low value. This is because when the power supply by the photovoltaic power generation increases, an increase in the amount of discharge from the storage battery can be prevented even when the discharge reference value is set at a low value. However, when the improvement of the weather is temporary, the power supply by the photovoltaic power generation decreases and the amount of discharge from the storage battery increases due to the discharge reference value set at a low value. This results in causing the storage battery to unnecessarily discharge electricity at an undesired timing. In this case, the remaining charge of the storage battery decreases due to the unnecessary discharge, and the peak-cut effect is reduced thereafter. That is, in the above case, the discharge reference value should not have been set at a low value.

On the other hand, when the weather worsens, the power supply by photovoltaic power generation may decrease and the power shortfall may increase. Accordingly, in this case, the discharge reference value needs to be set at a high value to prevent the remaining charge of the storage battery from being depleted. This is because the probability that electricity is discharged from the storage battery increases when the discharge reference value is left unchanged or set at a low value even when an increase in the power shortfall is expected. In the peak-cut control method, for example, it is desired to reduce the peaks (or to level the power shortfall) as far as possible in the entire operation of each day. However, when the worsening of the weather is temporary, electricity is not discharged from the storage battery until the power shortfall reaches the discharge reference value set at a high value. As a result, electricity is not discharged from the storage battery at a desired timing. That is, in this case, the discharge reference value should not have been set at a high value. If the discharge reference value has not been set at a high value, peaks may have been lowered.

Accordingly, it is an object in one aspect of the embodiment to reduce the influence of a sudden change of the weather on the effect of cutting peaks of the shortfall in the power supply by photovoltaic power generation.

MEANS FOR SOLVING PROBLEM

According to an aspect of the invention, there is provided an operation schedule generating apparatus for generating an operation schedule based on which an operation apparatus instructs a control apparatus for controlling a storage battery that discharges electricity when a shortfall in power supply by photovoltaic power generation exceeds a threshold. The operation schedule generating apparatus includes a first acquirer configured to obtain solar radiation information indicating a solar radiation condition and obtain a remaining charge of the storage battery via the control apparatus; a detector configured to detect a change in the solar radiation information within a predetermined time period preceding a current time; a storage configured to store each of threshold candidates of the threshold in association with a combination of the remaining charge of the storage battery, the solar radiation information, and a time when the solar radiation information is observed; a second acquirer configured to obtain, from the storage, a first threshold candidate corresponding to a combination of a first time when the change in the solar radiation information is detected, first solar radiation information at the first time, and the remaining charge of the storage battery at the first time, and a second threshold candidate corresponding to a combination of second solar radiation information at a second time that precedes the first time by the predetermined time period or more and the remaining charge of the storage battery at the second time; a selector configured to select one of the first threshold candidate and the second threshold candidate obtained by the second acquirer as a changed threshold corresponding to the remaining charge of the storage battery obtained by the first acquirer; and an adjuster configured to adjust the operation schedule based on the changed threshold selected by the selector.

EFFECT OF INVENTION

An embodiment of the present invention makes it possible to reduce the influence of a sudden change of the weather on the effect of cutting peaks of the shortfall in the power supply by photovoltaic power generation.

BRIEF DESCRIPTION OF DRAWINGS

FIG. 1 is a drawing used to describe a peak-cut control method;
FIG. 2 is a drawing illustrating an exemplary system configuration according to an embodiment of the present invention;
FIG. 3 is a drawing illustrating an exemplary hardware configuration of an operation apparatus according to an embodiment of the present invention;
FIG. 4 is a drawing illustrating a relationship among a direction of a sudden weather change, an ideal reference value, and a conservation reference value;
FIG. 5 is a drawing illustrating an exemplary functional configuration of an operation apparatus according to an embodiment of the present invention;
FIG. 6 is a flowchart illustrating an exemplary process performed by an operation status monitor;
FIG. 7 is a drawing illustrating an exemplary transition of the value of a control parameter;
FIG. 8 is a flowchart illustrating an exemplary process of determining a sudden weather change;
FIG. 9 is a flowchart illustrating an exemplary periodic correction process;
FIG. 10 is a drawing illustrating an exemplary configuration of an operation schedule DB;
FIG. 11 is a flowchart illustrating an exemplary reference value determination process;
FIG. 12 is a drawing illustrating a relationship among parameters used to obtain an ideal reference value and a conservation reference value;
FIG. 13 is a flowchart illustrating an exemplary discontinuation threshold calculation process; and
FIG. 14 is a flowchart illustrating an exemplary reference value selection process.

BEST MODE FOR CARRYING OUT INVENTION

Embodiments of the present invention are described below with reference to the accompanying drawings. FIG. 2 is a drawing illustrating an exemplary system configuration according to an embodiment of the present invention.

In FIG. 2, an operation apparatus 10 is connected via a network to an operation schedule generating apparatus 20. The operation schedule generating apparatus 20 is one or more computers for generating an operation schedule database (which is hereafter referred to as an "operation schedule DB 60"). The operation schedule DB 60 is a collection of candidates of operation schedules associated with application criteria. An operation schedule is a combination of one or more control parameters defining the operation of a storage battery 40. The control parameters are to be set in a control apparatus 30. For example, when the storage battery 40 is operated according to a peak-cut control method where electricity is discharged from the storage battery 40 when a shortfall in the power supply by photovoltaic power generation with reference to a power demand exceeds a predetermined power level, the power level (which is hereafter referred to as a "discharge reference value") is used as a control parameter, i.e., an operation schedule. Hereafter, a shortfall in the power supply by photovoltaic power generation is referred to as a "power shortfall". For example, the power shortfall may be power purchased from a power company. Also, application criteria indicate information specifying conditions for an operation schedule to be applied. For example, when operation status is monitored at regular time intervals and the operation schedule (discharge reference value) is corrected based on the amount of solar radiation and the remaining charge of the storage battery 40 at the corresponding time, a combination of a time at which whether to correct the operation schedule is to be determined, the amount of solar radiation, and the remaining charge of the storage battery 40 is used as application criteria. In the present embodiment, the operation schedule DB 60 may be generated by any appropriate method.

The operation apparatus 10 is one or more computers that output control commands for controlling charge and discharge operations of the storage battery 40 to the control apparatus 30 based on the operation schedule DB 60. For example, the operation apparatus 10 selects, at regular time intervals, an operation schedule corresponding to a combination of the current time, the amount of solar radiation at the current time, and the remaining charge of the storage battery 40 at the current time. The operation apparatus 10 outputs a control command corresponding to the selected operation schedule to the control apparatus 30.

The control apparatus 30 controls charging and discharging of the storage battery 40 according to control commands from the operation apparatus 10.

The operation schedule generating apparatus 20, the operation apparatus 10, and the control apparatus 30 may be implemented by one computer.

FIG. 3 is a drawing illustrating an exemplary hardware configuration of the operation apparatus 10 according to an embodiment of the present invention. As illustrated by FIG. 3, the operation apparatus 10 includes a drive 100, a secondary storage 102, a memory 103, a CPU 104, and an interface 105 that are connected to each other via a bus B.

Programs that implement processes performed by the operation apparatus 10 are provided via a storage medium 101. When the storage medium 101 storing the programs is set on the drive 100, the programs are read by the drive 100 from the storage medium 101 and installed in the secondary storage 102. The programs may not necessarily be installed from the storage medium 101, but may instead be downloaded via a network from another computer. The secondary storage 102 stores the installed programs and other necessary files and data.

The memory 103 stores programs read from the secondary storage 102 when execution of the programs is requested. The CPU 104 executes functions of the operation apparatus 10 according to the programs stored in the memory 103. The interface 105 connects the operation apparatus 10 to a network.

Examples of the storage medium 101 include portable storage media such as a CD-ROM, a DVD, and a USB memory. Examples of the secondary storage 102 include a hard disk drive (HDD) and a flash memory. The storage medium 101 and the secondary storage 102 are examples of computer-readable storage media.

Here, an outline of a process performed by the operation apparatus 10 is described. In a normal condition (where the weather does not suddenly change), the operation apparatus 10 corrects or changes a control parameter at a regular interval (periodically) according to the operation schedule DB 60. Hereafter, this correction or change of the operation schedule is referred to as a "periodic correction", and the regular interval is referred to as a "periodic correction cycle". Also, the time when the periodic correction is performed is referred to as a "periodic correction time". Further, a control parameter corrected by the periodic correction is referred to as a "corrected reference value".

When a sudden weather change is detected during the periodic correction cycle, the operation apparatus 10 determines an operation schedule assuming both of a case where the sudden weather change is a temporary phenomenon and the weather returns to the condition before the sudden change in a short period of time, and a case where the condition after the sudden change continues. More specifically, the operation apparatus 10 identifies discharge reference values corresponding to the respective cases based on records of the operation schedule DB 60 that correspond to the last periodic correction time before the detection of the sudden weather change. Thus, two discharge target values are identified. One of the two discharge reference values with which a greater peak-cut effect can be expected is hereafter referred to as an "ideal reference value". The other one of the two discharge reference values with which a lesser peak-cut effect can be expected is hereafter referred to as a "conservation reference value". In other words, the ideal reference value is a discharge reference value with which the amount of discharge from the storage battery 40 becomes relatively large, and the conservation reference value is a discharge reference value with which the amount of discharge from the storage battery 40 becomes relatively small. Also, the operation apparatus 10 determines the remaining charge of the storage battery 40 (which is hereafter referred to as a "discontinuation threshold") that is necessary to operate the storage battery 40 with the conservation reference value based on a record of the operation schedule DB 60 corresponding to the next periodic correction time. Thereafter, the operation apparatus 10 operates the storage battery 40 based on the ideal reference value as long as the remaining charge of the storage battery 40 is greater than the discontinuation threshold, and operates the storage battery 40 based on the conservation reference value when the remaining charge of the storage battery 40 becomes less than or equal to the discontinuation threshold to alleviate the influence of the sudden weather change on the peak-cut effect. The ideal reference value is used as long as possible because peaks of the power shortfall are more likely to be lowered when the ideal reference value is used.

Here, one of the two discharge reference values, which correspond to the case where the sudden weather change is a temporary phenomenon and the weather returns to the condition before the sudden change in a short period of time and the case where the condition after the sudden change continues, is used as the ideal reference value and the other one of the two discharge reference values is used as the conservation reference value depending on the direction of the sudden weather change.

FIG. 4 is a drawing illustrating a relationship among a direction of a sudden weather change, an ideal reference value, and a conservation reference value. FIG. 4 includes a graph (A) for a case where the weather temporarily improves and a graph (B) for a case where the weather temporarily deteriorates. In the graphs (A) and (B), the horizontal axis indicates time and the vertical axis indicates a power level. Also in the graphs (A) and (B), a line labeled "corrected reference value" indicates an operation schedule that is based on an assumption that only periodic corrections are performed.

In the graph (A), the weather suddenly improves between about 7 o'clock and about 9 o'clock and suddenly deteriorates between about 9 o'clock and about 10 o'clock. In other words, in the graph (A), the power supply by photovoltaic power generation (PV) suddenly increases between about 7 o'clock and about 9 o'clock and suddenly decreases between about 9 o'clock and about 10 o'clock.

In this case, the operation apparatus 10 determines an ideal reference value and a conservation reference value shortly after 9 o'clock. More specifically, the operation apparatus 10 determines, as a conservation reference value, a discharge reference value corresponding to a case where the weather returns to a condition before the sudden change in a short period of time, and determines, as an ideal reference value, a discharge reference value corresponding to a case where the condition after the sudden change continues.

On the other hand, in the graph (B), the weather suddenly deteriorates between a time shortly after 11 o'clock and about 12:30 o'clock and suddenly improves after 12:30 o'clock. In other words, in the graph (B), the power supply by photovoltaic power generation (PV) suddenly decreases between a time shortly after 11 o'clock and about 12:30 o'clock and suddenly increases after 12:30 o'clock.

In this case, the operation apparatus 10 determines an ideal reference value and a conservation reference value at about 12:30 o'clock. More specifically, the operation apparatus 10 determines, as an ideal reference value, a discharge reference value corresponding to a case where the weather returns to a condition before the sudden change in a short period of time, and determines, as a conservation reference value, a discharge reference value corresponding to a case where the condition after the sudden change continues.

As is understandable from the graphs (A) and (B), the conservation reference value is set at a discharge reference value corresponding to a case where the weather is in a relatively bad condition before and after the sudden weather change, i.e., a case where the power supply by photovoltaic power generation decreases and the power shortfall increases. On the other hand, the ideal reference value is set at a discharge reference value corresponding to a case where the weather is in a relatively good condition before and after the sudden weather change, i.e., a case where the power supply by photovoltaic power generation increases and the power shortfall decreases. Accordingly, the ideal reference value becomes smaller than the conservation reference value.

To implement the process outlined above, the operation apparatus 10 has, for example, a functional configuration as illustrated by FIG. 5.

FIG. 5 is a drawing illustrating an exemplary functional configuration of the operation apparatus 10 according to an embodiment of the present invention. As illustrated by FIG. 5, the operation apparatus 10 includes an operation status monitor 11, a periodic corrector 12, and a sudden-weather-change responder 13. These functional components are implemented by executing a program installed in the operation apparatus 10 by the CPU 104. The operation schedule DB 60 may be stored in the secondary storage 102, or may be stored in a storage connected via a network to the operation schedule generating apparatus 20 or the operation apparatus 10.

For example, at a predetermined interval (which is hereafter referred to as a "status monitoring cycle"), the operation status monitor 11 obtains, from the control apparatus 30, data (which is hereafter referred to as "status data") indicating operation status such as a measurement of the remaining charge of the storage battery 40 and an observed value of a solar radiation condition. When a periodic correction time comes, the operation status monitor 11 causes the periodic corrector 12 to perform a periodic correction, and sends a corrected reference value obtained as a result of the periodic correction to the control apparatus 30. Also, when a sudden weather change is detected, the operation status monitor 11 causes the sudden-weather-change responder 13 to determine an ideal reference value, a conservation reference value, and a discontinuation threshold. In this case, the operation status monitor 11 first sends the ideal reference value to the control apparatus 30. When the remaining charge of the storage battery 40 becomes lower than a lower limit of a range in which the storage battery 40 can be operated with the conservation reference value at the next periodic correction time, the operation status monitor 11 sends the conservation reference value to the control apparatus 30. The lower limit is determined based on a value in the operation schedule DB 60 corresponding to the next periodic correction time that comes first. Here, the observed value of the solar radiation condition may not necessarily be obtained from the control apparatus 30.

As illustrated in FIG. 5, the operation status monitor 11 includes an operation status acquirer 111, a sudden-weather-change detector 112, a reference value selector 113, and a control parameter setter 114. The operation status acquirer 111 obtains status data. The sudden-weather-change detector 112 detects a sudden weather change based on the status data. The reference value selector 113 selects one of the ideal reference value and the conservation reference value as a control parameter to be set in the control apparatus 30 based on a result of comparison between the remaining charge of the storage battery 40 and the discontinuation threshold. The control parameter setter 114 sends one of the corrected reference value, the ideal reference value, and the conservation reference value as a control parameter to the control apparatus 30 (or sets the control parameter in the control apparatus 30). That is, one of the corrected reference value, the ideal reference value, and the conservation reference value is reflected in the operation schedule.

The periodic corrector 12 determines a corrected reference value based on the amount of solar radiation and the remaining charge of the storage battery 40 indicated by status data obtained at the periodic correction time and on the operation schedule DB 60. In the present embodiment, the amount of solar radiation is used as an example of a value indicating a solar radiation condition. A different indicator such as a sunshine duration may also be used as a value indicating a solar radiation condition.

The sudden-weather-change responder 13 determines an ideal reference value, a conservation reference value, and a discontinuation threshold. More specifically, the sudden-weather-change responder 13 obtains a discharge reference value from the operation schedule DB 60 for each of the amount of solar radiation at the time of a sudden weather change and the amount of solar radiation before the sudden weather change based on the remaining charge of the storage battery 40 at the time of the sudden weather change. The sudden-weather-change responder 13 determines one of the obtained discharge reference values with which a greater peak-cut effect can be expected as an ideal reference value and determines the other one of the obtained discharge reference values as a conservation reference value. Also, the sudden-weather-change responder 13 determines a discontinuation threshold based on the conservation reference value.

Next, processes performed by the operation apparatus 10 are described. FIG. 6 is a flowchart illustrating an exemplary process performed by the operation status monitor 11. The process of FIG. 6 is repeatedly performed at the status monitoring cycle of, for example, about 1 to 10 minutes. In the present embodiment, for convenience, it is assumed that the periodic correction cycle is N times greater than the status monitoring cycle (N is an integer greater than or equal to 2). That is, the status monitoring cycle is shorter than the periodic correction cycle, and the periodic correction cycle is an integral multiple of the status monitoring cycle. Accordingly, one of the N times at which the process of FIG. 6 is performed corresponds to the periodic correction time.

At step S101, the operation status acquirer 111 of the operation status monitor 11 obtains status data from the control apparatus 30. The status data includes the amount of solar radiation and the remaining charge of the storage battery 40 at the current time. Next, the operation status monitor 11 determines whether the current time is a periodic correction time (S102). Whether the current time is a periodic correction time can be determined by referring to the operation schedule DB 60. As described later, the operation schedule DB 60 stores a periodic correction time at each periodic correction cycle. The current time may be obtained from a clock (not shown) of the operation apparatus 10 or may be included in status data.

When the current time is not a periodic correction time (NO at S102), the operation status monitor 11 determines whether the ideal reference value is valid (S103). The ideal reference value is valid when the ideal reference value is selected as a control parameter, i.e., when the storage battery 40 is being operated based on the ideal reference value. For example, the determination at step S103 is performed by referring to a variable (which is hereafter referred to as an "ideal reference flag") indicating whether the ideal reference value is valid. For example, the ideal reference flag can take a value of "true" or "false". Here, "true" indicates that the ideal reference value is valid, and "false" indicates that the ideal reference value is invalid. Because the ideal reference value is determined at a later step, the ideal reference value is invalid when step S103 is performed for the first time. In other words, the initial value of the ideal reference flag is "false".

When the ideal reference value is invalid (NO at S103), the sudden-weather-change detector 112 of the operation status monitor 11 determines whether the weather has suddenly changed (S104). Details of this determination step are described later. When a sudden weather change is detected (YES at S104), the operation status monitor 11 causes the sudden-weather-change responder 13 to perform a reference value determination process (S105). In the reference value determination process, the ideal reference value and the conservation reference value are determined. Next, the operation status monitor 11 causes the sudden-weather-change responder 13 to perform a discontinuation threshold calculation process (S106). In the discontinuation threshold calculation process, the discontinuation threshold is calculated. Details of the reference value determination process and the discontinuation threshold calculation process are described later.

Next, the reference value selector 113 of the operation status monitor 11 performs a reference value selection process (S107). In the reference value selection process, one of the ideal reference value and the conservation reference value is selected as a control parameter based on a result of comparing the remaining charge of the storage battery 40 indicated by the status data with the discontinuation threshold. When the ideal reference value is selected, the ideal reference value becomes valid. Details of the reference value selection process are described later. Next, the control parameter setter 114 of the operation status monitor 11 sends the control parameter indicating the selected reference value to the control apparatus 30 (S108). When no sudden weather change is detected (NO at S104), steps S105 through S108 are not performed.

Also, when the ideal reference value is valid at step S103 (YES at S103), steps S106 through S108 are performed. That is, after the ideal reference value is determined to be valid in one periodic correction cycle, whether it is necessary to switch to the conservation reference value is determined by the reference value selection process, and the conservation reference value is selected as the control parameter when needed.

In the exemplary process of FIG. 6, the reference value determination process is not performed as long as the ideal reference value is valid. However, the process may also be configured such that the reference value determination process is performed even when the ideal reference value is valid to recalculate the ideal reference value and the conservation reference value. In this case, the branching step S103 may be omitted.

On the other hand, when the current time is a periodic correction time (YES at S102), the operation status monitor 11 updates the value retained in itself and indicating the remaining charge of the storage battery 40 at the last periodic correction time with a value indicated by the status data (S109). Next, the operation status monitor 11 initializes the ideal reference flag to "false" (S110). That is, the ideal reference value or the conservation reference value set as a result of a sudden weather change is invalidated every periodic correction time. This indicates that the operation based on the ideal reference value or the conservation reference value determined in a periodic correction cycle is valid within the periodic correction cycle.

Next, the sudden-weather-change detector 112 of the operation status monitor 11 determines whether the weather has suddenly changed (S111). Step S111 may be the same as step S104. When no sudden weather change is detected (NO at S111), the operation status monitor 11 causes the periodic corrector 12 to perform a periodic correction process (S112). In the periodic correction process, a discharge reference value corresponding to the current time and the status data is determined as a corrected reference value. In this case, at step S108, a control parameter indicating the corrected reference value determined in the periodic correction process is sent to the control apparatus 30. Details of the periodic correction process are described later.

On the other hand, when a sudden weather change is detected (YES at S111), steps S105 through S108 are performed. That is, when a sudden weather change is detected at the periodic correction time, a process to respond to the sudden weather change is performed in preference to the periodic correction process.

The control apparatus 30 receives the control parameter sent at step S108 and when the power shortfall is greater than the value indicated by the control parameter, causes the storage battery 40 to discharge electricity. As a result, peaks of the power short fall are kept at levels less than or equal to the value indicated by the control parameter.

An exemplary transition of the value of the control parameter according to the process of FIG. 6 is described below. FIG. 7 is a drawing illustrating an exemplary transition of the value of the control parameter. FIG. 7 illustrates an exemplary transition of the value of the control parameter in one periodic correction cycle from a periodic correction time t1 to a periodic correction time t4.

First, at the periodic correction time t1, a control parameter indicating a corrected reference value 1 determined by the periodic corrector 12 is set in the control apparatus 30. Next, when a sudden weather change is detected at a time t2, an ideal reference value and a conservation reference value are determined, and a control parameter indicating the ideal reference value is set in the control apparatus 30. Next, when the remaining charge of the storage battery 40 becomes lower than a discontinuation threshold at a time t3, a control parameter indicating the conservation reference value is set in the control apparatus 30. Next, at the periodic correction time t4, a control parameter indicating a corrected reference value 2 determined by the periodic corrector 12 is set in the control apparatus 30. Compared with a case where the corrected reference value 1 set at the periodic correction time t1 is maintained, setting the ideal reference value at the time t2 and setting the conservation reference value at the time t3 make it possible to increase the possibility that the influence of the sudden weather change on the peak-cut effect is reduced.

Here, the corrected reference value 1 and the corrected reference value 2 may not necessarily be the same. Also, if a sudden weather change is detected at the periodic correction time t1 or the periodic correction time t4, an ideal reference value and a conservation reference value are determined, and a control parameter indicating the ideal reference value is set in the control apparatus 30. Further, if the remaining charge of the storage battery 40 does not become lower than the discontinuation threshold between the time t2 and the periodic correction time t4, the control parameter indicating the conservation reference value is not set in the control apparatus 30.

Next, details of step S104/S111 of FIG. 6 are described below. FIG. 8 is a flowchart illustrating an exemplary process of determining a sudden weather change.

At step S201, the sudden-weather-change detector 112 converts the amount of solar radiation I (t) at a current time (t) into relative sunshine duration SD (t). The amount of solar radiation I (t) is included in status data obtained at the time (t). The conversion from the amount of solar radiation into the relative sunshine duration may be performed, for example, by using a conversion table generated by a regression analysis based on past data.

Next, the sudden-weather-change detector 112 converts the amount of solar radiation I (t-Δt) in status data obtained at a time (t-Δt), which precedes the time (t) by Δt, into relative sunshine duration SD (t-Δt) (S202). For example, Δt is an integral multiple of the status monitoring cycle. Hereafter, the time (t-Δt) is referred to as a "relative-sunshine-duration comparison reference time". The sudden-weather-change detector 112 may be configured to retain the amount of solar radiation included in status data obtained at each status monitoring cycle. This enables the sudden-weather-change detector 112 to determine the amount of solar radiation I (t-Δt) at the relative-sunshine-duration comparison reference time.

Next, the sudden-weather-change detector 112 determines whether formula (1) below, which is an example of a condition indicating a sudden weather change, is satisfied (S203).

$$|SD(t) - SD(t-\Delta t)| / \Delta t > \delta \quad \ldots (1)$$

That is, the sudden-weather-change detector 112 determines whether a value obtained by dividing an absolute value of a difference between the relative sunshine duration at the time (t) and the relative sunshine duration at the time (t-Δt) by Δt is greater than a threshold δ. The threshold 5 may be set at any appropriate value.

When formula (1) is satisfied (YES at S203), the sudden-weather-change detector 112 detects a sudden weather change (S204). When formula (1) is not satisfied (NO at S203), the sudden-weather-change detector 112 detects no sudden weather change.

Here, Δt is not necessarily a constant. For example, a periodic correction time immediately preceding the last periodic correction time before the time (t) may be used as a reference time (t-Δt) for comparing the amounts of solar radiation.

Next, details of step S112 of FIG. 6 are described. FIG. 9 is a flowchart illustrating an exemplary periodic correction process. The process of FIG. 9 is basically performed at the periodic correction cycle. However, when a sudden weather change is detected at the periodic correction time, the process of FIG. 9 is not performed.

At step S301, the periodic corrector 12 obtains, from the operation schedule DB 60, a discharge reference value corresponding to application criteria that match the current time, and the amount of solar radiation and the remaining charge of the storage battery 40 indicated by status data.

FIG. 10 is a drawing illustrating an exemplary configuration of the operation schedule DB 60. As illustrated by FIG. 10, each record of the operation schedule DB 60 includes items such as "month", "time", "remaining charge of storage battery", "amount of solar radiation", "relative sunshine duration", and "discharge reference value". Among these items, "month", "time", "remaining charge of storage battery", "amount of solar radiation", and "relative sunshine duration" constitute application criteria. However, one of "amount of solar radiation" and "relative sunshine duration" may be omitted from the application criteria. At step S301, the periodic corrector 12 obtains a discharge reference value corresponding to application criteria that match a month to which the current day belongs, the current time, the remaining charge of the storage battery 40, and the amount of solar radiation in status data. The operation schedule DB 60 includes multiple records for each time of each month.

For example, when the remaining charge of the storage battery 40 is 50% and the amount of solar radiation is 0.217 kWh at 8 o'clock on a given day in July, 19 kW is obtained as a discharge reference value. Although the relative sunshine duration is not used in the present embodiment, the relative sunshine duration may be used instead of the amount of solar radiation. Also, the current time and the status data may not necessarily perfectly match the application criteria. For example, assuming that continuous values such as the remaining charge of the storage battery and the amount of solar radiation are discretized at a granularity level that does not greatly influence the operation and discharge reference values for respective application criteria are optimized, a discharge reference value corresponding to application criteria that are relatively close to the current time and the status data may be obtained.

Next, the periodic corrector 12 determines the obtained discharge reference value as a corrected reference value (S302).

The process of FIG. 9 may not necessarily be performed in synchronization with the process of FIG. 6. That is, the process of FIG. 9 may be performed in parallel with the process of FIG. 6 at the periodic correction cycle. In this case, step S112 may be removed from FIG. 6, and the process of FIG. 9 may be preferentially performed when the timing to perform the process of FIG. 6 coincides with the timing to perform the process of FIG. 9.

The operation schedule DB 60 is generated in advance by the operation schedule generating apparatus 20. The operation schedule generating apparatus 20 estimates a discharge reference value that is highly likely to maximize the peak-cut rate under some possible conditions, and registers the estimated discharge reference value together with application criteria indicating those conditions as a record of the operation schedule DB 60.

To estimate a discharge reference value that is highly likely to maximize the peak-cut rate, an optimization technique such as a genetic algorithm or Particle Swarm Optimization (PSO) may be used. Also for this purpose, a technique based on a comprehensive supply-demand scenario as described in WO 2012/127585 may be used.

Next, details of step S105 of FIG. 6 are described. FIG. 11 is a flowchart illustrating an exemplary reference value determination process.

At step S401, from records of the operation schedule DB 60 that correspond to the last periodic correction time (which is hereafter referred to as a "previous periodic correction time") before a time (t) at which a sudden weather change is detected, the sudden-weather-change responder 13 searches for a record whose application criteria match the amount of solar radiation (which is hereafter referred to as a "sudden-change solar-radiation amount") at the time (t) and the remaining charge of the storage battery 40 (which is hereafter referred to as a "previous-periodic-correction-time remaining charge") at the previous periodic correction time. Also in this process, the matching may not necessarily be a perfect matching. The sudden-weather-change responder 13 obtains a discharge reference value from the record found by the search. Hereafter, this discharge reference value is referred to as a "sudden-change reference value". In a sense, the sudden-change reference value is a discharge reference value that would have been selected if the amount of solar radiation at the previous periodic correction time had been the amount of solar radiation at the time (t). When the time (t) at which the sudden weather change is detected matches a periodic correction time, i.e., when step S107 is performed after a sudden weather change is detected (YES) at step S111, the time (t) is used as the previous periodic correction time. In this case, in a sense, the sudden-change reference value is a discharge reference value that can be selected if the amount of solar radiation at the current periodic correction time is the amount of solar radiation at the time (t).

The remaining charge of the storage battery 40 at the previous periodic correction time can be identified by referring to the value of the remaining charge of the storage battery 40 that is updated at step S109 of FIG. 6 at every periodic correction time.

Next, from records of the operation schedule DB 60 that correspond to the previous periodic correction time, the sudden-weather-change responder 13 searches for a record whose application criteria match the amount of solar radiation at the time (t-Δt) before the sudden weather change and the previous-periodic-correction-time remaining charge. The sudden-weather-change responder 13 obtains a discharge reference value from the record found by the search (S402). Hereafter, this discharge reference value is referred to as a "pre-sudden-change reference value". In a sense, the pre-sudden-change reference value is a discharge reference value that would have been selected if the amount of solar radiation at the previous periodic correction time had been the amount of solar radiation at the time (t-Δt).

Next, the sudden-weather-change responder 13 compares the pre-sudden-change reference value and the sudden-change reference value (S403). Based on the result of the comparison, the sudden-weather-change responder 13 determines a smaller one of them as an ideal reference value (S404), and determines a larger one of them as a conservation reference value (S405). Also, the sudden-weather-change responder 13 determines the amount of solar radiation in the record from which the ideal reference value is obtained as an ideal solar radiation amount (S404), and determines the amount of solar radiation in the record from which the conservation reference value is obtained as a conservation solar radiation amount (S405).

Here, the peak-cut effect decreases as the value of the control parameter increases, and the peak-cut effect increases as the value of the control parameter decreases. Also, the relationship in size between the pre-sudden-change reference value and the sudden-change reference value changes depending on the direction of the sudden weather change. For these reasons, the pre-sudden-change reference value and the sudden-change reference value are compared with each other, one of the reference values whose peak-cut effect is higher is used as the ideal reference value, and the other one of the reference values whose peak-cut effect is lower but which can reduce the amount of discharge of the storage battery 40 is used as the conservation reference value.

Accordingly, with the ideal reference value, the storage battery 40 can be operated in a manner to suit a case where the weather is in a relatively good condition before and after the sudden weather change. On the other hand, with the conservation reference value, the storage battery 40 can be operated in a manner to suit a case where the weather is in a relatively bad condition before and after the sudden weather change.

The relationship among parameters used to obtain the ideal reference value and the conservation reference value in the process of FIG. 11 is described below.

FIG. 12 is a drawing illustrating a relationship among parameters used to obtain the ideal target value and the maintenance target value.

As illustrated in FIG. 12, the pre-sudden-change reference value is a discharge reference value in a record whose application criteria match the amount of solar radiation (pre-sudden-change solar radiation amount) before the sudden weather change and the previous-periodic-correction-time remaining charge and which is found from records of the operation schedule DB 60 that correspond to the previous periodic correction time. The sudden-change reference value is a discharge reference value in a record whose application criteria match the amount of solar radiation (sudden-change solar radiation amount) at the time of the sudden weather change and the previous-periodic-correction-time remaining charge and which is found from records of the operation schedule DB 60 that correspond to the previous periodic correction time. Thus, the pre-sudden-change reference value and the sudden-change reference value are identified using the amounts of solar radiation observed at different times.

Based on the result of comparison between the pre-sudden-change reference value and the sudden-change reference value, a larger one of them is used as the conservation reference value, and a smaller one of them is used as the ideal reference value. Also, one of the pre-sudden-change solar radiation amount and the sudden-change solar radiation amount used to identify the conservation reference values is identified as the conservation solar radiation amount, and the other one of them used to identify the ideal reference value is identified as the ideal solar radiation amount.

Next, details of step S106 of FIG. 6 are described. FIG. 13 is a flowchart illustrating an exemplary discontinuation threshold calculation process.

At step S501, from records of the operation schedule DB 60 that correspond to the next periodic correction time, the sudden-weather-change responder 13 searches for a record that includes the conservation reference value and an amount of solar radiation that matches the conservation solar radiation amount, and obtains the remaining charge of storage battery from the record found by the search. Also in this process, the matching may not necessarily be a perfect matching.

Because the records of the operation schedule DB 60 are basically generated for probable application criteria, it is possible to obtain a remaining charge of storage battery that is necessary or suitable for operation with a discharge reference value based on the discharge reference value and an application criterion other than the remaining charge of storage battery. Accordingly, the remaining charge of storage battery obtained in this manner indicates an amount of charge that needs to remain in the storage battery 40 when the amount of solar radiation at a time in the record storing the obtained remaining charge of storage battery matches the amount of solar radiation in the record and the storage battery 40 is operated at the time based on a discharge reference value in the record.

In other words, the remaining charge of storage battery obtained at step S501 indicates an amount of charge that needs to remain in the storage battery 40 when the amount of solar radiation at the next periodic correction time is the conservation solar radiation amount and the storage battery 40 is operated based on the conservation reference value at the next periodic correction time. Here, the requirement that the amount of solar radiation at the next periodic correction time is the conservation solar radiation amount is equivalent to the requirement that the weather at the next periodic correction time is relatively in a bad condition before and after the sudden weather change.

For example, according to FIG. 10, when the next periodic correction time is 15 o'clock, the conservation solar radiation amount is 0.344 kWh, and the conservation reference value is 23.5 kW, a remaining charge of storage battery of 20% is obtained at step S501 from a record corresponding to these parameters. This record indicates that the storage battery 40 can be operated at the next periodic correction time based on a corrected reference value of 23.5 kW when the conservation solar radiation amount is 0.344 kWh and the remaining charge of the storage battery 40 is 20%. Accordingly, even when the amount of discharge increases due to operation based on the ideal reference value, the storage battery 40 can be operated based on the conservation reference value of 23.5 kW as long as the remaining charge of the storage battery 40 is greater than 20%.

Hereafter, the remaining charge of storage battery obtained at step S501 is referred to a "next-periodic-correction-time required charge".

Next, the sudden-weather-change responder 13 calculates a discontinuation threshold based on the next-periodic-correction-time required charge (S502).

For example, the next-periodic-correction-time required charge may be used as a discontinuation threshold. However, to increase the chance that the remaining charge of the storage battery 40 at the next periodic correction time is greater than or equal to the next-periodic-correction-time required charge, the discontinuation threshold is preferably set at a value greater than the next-periodic-correction-time required charge. That is, in determining the discontinuation threshold, it is preferable to take into account a change in the remaining charge of the storage battery 40 during a period between the time when the control parameter is switched from the ideal reference value to the conservation reference value and the next periodic correction time.

For this reason, the sudden-weather-change responder 13 assumes that the remaining charge of the storage battery 40 changes linearly during a period between the previous periodic correction time and the next periodic correction time, and calculates a discontinuation threshold by linearly interpolating the next-periodic-correction-time required charge. More specifically, the sudden-weather-change responder 13 calculates a discontinuation threshold based on formula (2) below.

Discontinuation threshold = previous-periodic-correction-time remaining charge - elapsed time (min) after previous periodic correction time x (previous-periodic-correction-time remaining charge - next-periodic-correction-time required charge) / periodic correction cycle (min) ... (2)

For example, when the previous-periodic-correction-time remaining charge is 30% and the next-periodic-correction-time required charge is 20%, it is assumed that a difference of 10% between 30% and 20% is evenly discharged during a period between the previous periodic correction time and the next periodic correction time. Thus, when, for example, the current time is at the midpoint between the previous periodic correction time and the next periodic correction time, the discontinuation threshold is set at 25%.

However, an interpolation technique other than linear interpolation may be used to interpolate the next-periodic-correction-time required charge. For example, a value corresponding to elapsed time after the previous periodic correction time may be stored beforehand in the secondary storage 102, and added to the next-periodic-correction-time required charge.

Here, when the next-periodic-correction-time required charge is less than the previous-periodic-correction-time remaining charge, it is assumed that the storage battery 40 is evenly discharged. On the other hand, when the next-periodic-correction-time required charge is greater than the previous-periodic-correction-time remaining charge, it is assumed that the storage battery 40 is evenly charged.

Next, details of step S107 of FIG. 6 are described. FIG. 14 is a flowchart illustrating an exemplary reference value selection process.

At step S601, the reference value selector 113 compares the discontinuation threshold and the remaining charge of the storage battery 40. Here, the remaining charge of the storage battery 40 is indicated by a value included in the status data obtained at step S101 of FIG. 6 (i.e., the remaining charge at the current time). This comparison is an example of determining whether a difference between the remaining charge of the storage battery 40 and the next-periodic-correction-time required charge is greater than or equal to a predetermined value. Here, the predetermined value is a difference between the discontinuation threshold and the next-periodic-correction-time required charge.

When the remaining charge of the storage battery 40 is greater than the discontinuation threshold (YES at S601), the reference value selector 113 validates the ideal reference value (S602). That is, "true" is assigned to the ideal reference flag. Next, the reference value selector 113 selects the ideal reference value as the control parameter (S603).

On the other hand, when the remaining charge of the storage battery 40 is less than or equal to the discontinuation threshold (NO at S601), the reference value selector 113 invalidates the ideal reference value (S604). That is, "false" is assigned to the ideal reference flag. Next, the reference value selector 113 selects the conservation reference value as the control parameter (S605).

As described above, according to the present embodiment, when a sudden weather change is detected, an ideal reference value and a conservation reference value are determined as candidates for a control parameter based on solar radiation conditions before and after the sudden weather change. While the storage battery 40 retains an amount of charge necessary to use the conservation reference value as the control parameter at the next periodic correction time, the ideal reference value is selected as the control parameter; and when the remaining charge of the storage battery 40 becomes less than or equal to the necessary amount of charge, the conservation reference value is selected as the control parameter.

Compared with a case where the storage battery 40 is operated by statically using a corrected reference value as the control parameter in one periodic correction cycle when a sudden weather change is detected, the above method makes it possible to reduce the influence of the sudden weather change on the peak-cut effect.

Also according to the present embodiment, the ideal reference value, the conservation reference value, and the discontinuation threshold are determined based on the operation schedule DB 60 that is generated in advance by the operation schedule generating apparatus 20. This makes it possible to suppress an increase in additional calculation costs that become necessary during operation to cope with a sudden weather change.

Processes performed by the operation apparatus 10 in the present embodiment may instead be performed by the operation schedule generating apparatus 20. In this case, the operation apparatus 10 may be configured to set a threshold selected by the operation schedule generating apparatus 20 in the control apparatus 30. Also, the present embodiment may be implemented without providing the operation apparatus 10 and the operation schedule generating apparatus 20 separately. That is, one of the operation apparatus 10 and the operation schedule generating apparatus 20 may be configured to include functions of the other.

In the present embodiment, the operation apparatus 10 is an example of an operation schedule generating apparatus. The control parameter is an example of a threshold. The operation status acquirer 111 is an example of a first acquirer. The sudden-weather-change responder 13 is an example of a second acquirer. The sudden-weather-change detector 112 is an example of a detector. The reference value selector 113 is an example of a selector. The operation schedule 60 is an example of a storage. The amount of solar radiation is an example of solar radiation information. The control parameter setter 114 is an example of an adjuster.

Embodiments of the present invention are described above. However, the present invention is not limited to the specifically disclosed embodiments, and variations and modifications may be made without departing from the scope of the present invention.

EXPLANATION OF REFERENCE NUMERALS

| | |
|---|---|
| 10 | Operation apparatus |
| 11 | Operation status monitor |
| 12 | Periodic corrector |
| 13 | Sudden-weather-change responder |
| 20 | Operation schedule generating apparatus |
| 30 | Control apparatus |
| 40 | Storage battery |
| 60 | Operation schedule DB |
| 100 | Drive |
| 101 | Storage medium |
| 102 | Secondary storage |
| 103 | Memory |
| 104 | CPU |

105 Interface
111 Operation status acquirer
112 Sudden-weather-change detector
113 Reference value selector
114 Control parameter setter
B Bus

**Claims**

**1.** An operation schedule generating apparatus for generating an operation schedule based on which an operation apparatus instructs a control apparatus for controlling a storage battery that discharges electricity when a shortfall in power supply by photovoltaic power generation exceeds a threshold, the operation schedule generating apparatus comprising:

a first acquirer configured to obtain solar radiation information indicating a solar radiation condition and obtain a remaining charge of the storage battery via the control apparatus;
a detector configured to detect a change in the solar radiation information within a predetermined time period preceding a current time;
a storage configured to store each of threshold candidates of the threshold in association with a combination of the remaining charge of the storage battery, the solar radiation information, and a time when the solar radiation information is observed;
a second acquirer configured to obtain, from the storage, a first threshold candidate corresponding to a combination of a first time when the change in the solar radiation information is detected, first solar radiation information at the first time, and the remaining charge of the storage battery at the first time, and a second threshold candidate corresponding to a combination of second solar radiation information at a second time that precedes the first time by the predetermined time period or more and the remaining charge of the storage battery at the second time;
a selector configured to select one of the first threshold candidate and the second threshold candidate obtained by the second acquirer as a changed threshold corresponding to the remaining charge of the storage battery obtained by the first acquirer; and
an adjuster configured to adjust the operation schedule based on the changed threshold selected by the selector.

**2.** The operation schedule generating apparatus as claimed in claim 1, wherein
the second acquirer is configured to obtain, from the storage, the remaining charge of the storage battery that corresponds to

a first candidate that is a larger one of the first threshold candidate and the second threshold candidate,
a later time later than the first time, and
the solar radiation information observed at the first time or the second time and corresponding to the first candidate; and

the selector is configured select a smaller one of the first threshold candidate and the second threshold candidate as the changed threshold while a difference between the remaining charge of the storage battery obtained by the first acquirer and the remaining charge of the storage battery obtained by the second acquirer is greater than a predetermined value.

**3.** The operation schedule generating apparatus as claimed in claim 2, wherein the selector is configured to select the first candidate as the changed threshold while the difference between the remaining charge of the storage battery obtained by the first acquirer and the remaining charge of the storage battery obtained by the second acquirer is less than or equal to the predetermined value.

**4.** An operation schedule generating method performed by an operation schedule generating apparatus for generating an operation schedule based on which an operation apparatus instructs a control apparatus for controlling a storage battery that discharges electricity when a shortfall in power supply by photovoltaic power generation exceeds a threshold, the operation schedule generating method comprising:

by a first acquirer of the operation schedule generating apparatus, obtaining solar radiation information indicating a solar radiation condition and obtaining a remaining charge of the storage battery via the control apparatus;
by a detector of the operation schedule generating apparatus, detecting a change in the solar radiation information within a predetermined time period preceding a current time;
by a second acquirer of the operation schedule generating apparatus, obtaining, from a storage of the operation schedule generating apparatus, a first threshold candidate corresponding to a combination of a first time when the change in the solar radiation information is detected, first solar radiation information at the first time, and the remaining charge of the storage battery at the first time, and a second threshold candidate corresponding to a combination of second solar radiation information at a second time that precedes the first time by the predetermined time period or more and the remaining charge of the storage battery at the second time, the storage storing each of threshold candidates of the threshold in association with a combination of the remaining charge of the storage battery, the solar radiation information, and a time when the solar radiation information is observed;
by a selector of the operation schedule generating apparatus, selecting one of the first threshold candidate and the second threshold candidate obtained by the second acquirer as a changed threshold corresponding to the remaining charge of the storage battery obtained by the first acquirer; and
by an adjuster of the operation schedule generating apparatus, adjusting the operation schedule based on the changed threshold selected by the selector.

**5.** The operation schedule generating method as claimed in claim 4, wherein
the obtaining the threshold candidates further obtains, from the storage, the remaining charge of the storage battery that corresponds to

a first candidate that is a larger one of the first threshold candidate and the second threshold candidate,
a later time later than the first time, and
the solar radiation information observed at the first time or the second time and corresponding to the first candidate; and

in the selecting, a smaller one of the first threshold candidate and the second threshold candidate is selected as the changed threshold while a difference between the remaining charge of the storage battery obtained in the obtaining the remaining charge of the storage battery and the remaining charge of the storage battery obtained in the obtaining the threshold candidates is greater than a predetermined value.

**6.** An operation schedule generating program of an operation schedule generating apparatus for generating an operation schedule based on which an operation apparatus instructs a control apparatus for controlling a storage battery that discharges electricity when a shortfall in power supply by photovoltaic power generation exceeds a threshold, the operation schedule generating program causing the operation schedule generating apparatus to execute a process comprising:

by a first acquirer of the operation schedule generating apparatus, obtaining solar radiation information indicating a solar radiation condition and obtaining a remaining charge of the storage battery via the control apparatus;
by a detector of the operation schedule generating apparatus, detecting a change in the solar radiation information within a predetermined time period preceding a current time;
by a second acquirer of the operation schedule generating apparatus, obtaining, from a storage of the operation schedule generating apparatus, a first threshold candidate corresponding to a combination of a first time when the change in the solar radiation information is detected, first solar radiation information at the first time, and the remaining charge of the storage battery at the first time, and a second threshold candidate corresponding to a combination of second solar radiation information at a second time that precedes the first time by the predetermined time period or more and the remaining charge of the storage battery at the second time, the storage storing each of threshold candidates of the threshold in association with a combination of the remaining charge of the storage battery, the solar radiation information, and a time when the solar radiation information is observed;
by a selector of the operation schedule generating apparatus, selecting one of the first threshold candidate and the second threshold candidate obtained by the second acquirer as a changed threshold corresponding to the remaining charge of the storage battery obtained by the first acquirer; and
by an adjuster of the operation schedule generating apparatus, adjusting the operation schedule based on the changed threshold selected by the selector.

**7.** The operation schedule generating program as claimed in claim 6, wherein

the obtaining the threshold candidates further obtains, from the storage, the remaining charge of the storage battery that corresponds to

a first candidate that is a larger one of the first threshold candidate and the second threshold candidate,
a later time later than the first time, and
the solar radiation information observed at the first time or the second time and corresponding to the first candidate; and

in the selecting, a smaller one of the first threshold candidate and the second threshold candidate is selected as the changed threshold while a difference between the remaining charge of the storage battery obtained in the obtaining the remaining charge of the storage battery and the remaining charge of the storage battery obtained in the obtaining the threshold candidates is greater than a predetermined value.

**8.** The operation schedule generating program as claimed in claim 7, wherein in the selecting, the first candidate is selected as the changed threshold while the difference between the remaining charge of the storage battery obtained in the obtaining the remaining charge of the storage battery and the remaining charge of the storage battery obtained in the obtaining the threshold candidates is less than or equal to the predetermined value.

**9.** A storage battery system, comprising:

a storage battery that discharges electricity when a shortfall in power supply by photovoltaic power generation exceeds a threshold;
a control apparatus for controlling the storage battery;
an operation apparatus that instructs the control apparatus based on an operation schedule; and
an operation schedule generating apparatus that generates the operation schedule,
wherein the operation schedule generating apparatus includes

a first acquirer configured to obtain solar radiation information indicating a solar radiation condition and obtain a remaining charge of the storage battery via the control apparatus;
a detector configured to detect a change in the solar radiation information within a predetermined time period preceding a current time;
a storage configured to store each of threshold candidates of the threshold in association with a combination of the remaining charge of the storage battery, the solar radiation information, and a time when the solar radiation information is observed;
a second acquirer configured to obtain, from the storage, a first threshold candidate corresponding to a combination of a first time when the change in the solar radiation information is detected, first solar radiation information at the first time, and the remaining charge of the storage battery at the first time, and a second threshold candidate corresponding to a combination of second solar radiation information at a second time that precedes the first time by the predetermined time period or more and the remaining charge of the storage battery at the second time;
a selector configured to select one of the first threshold candidate and the second threshold candidate obtained by the second acquirer as a changed threshold corresponding to the remaining charge of the storage battery obtained by the first acquirer; and
an adjuster configured to adjust the operation schedule based on the changed threshold selected by the selector.

FIG.1

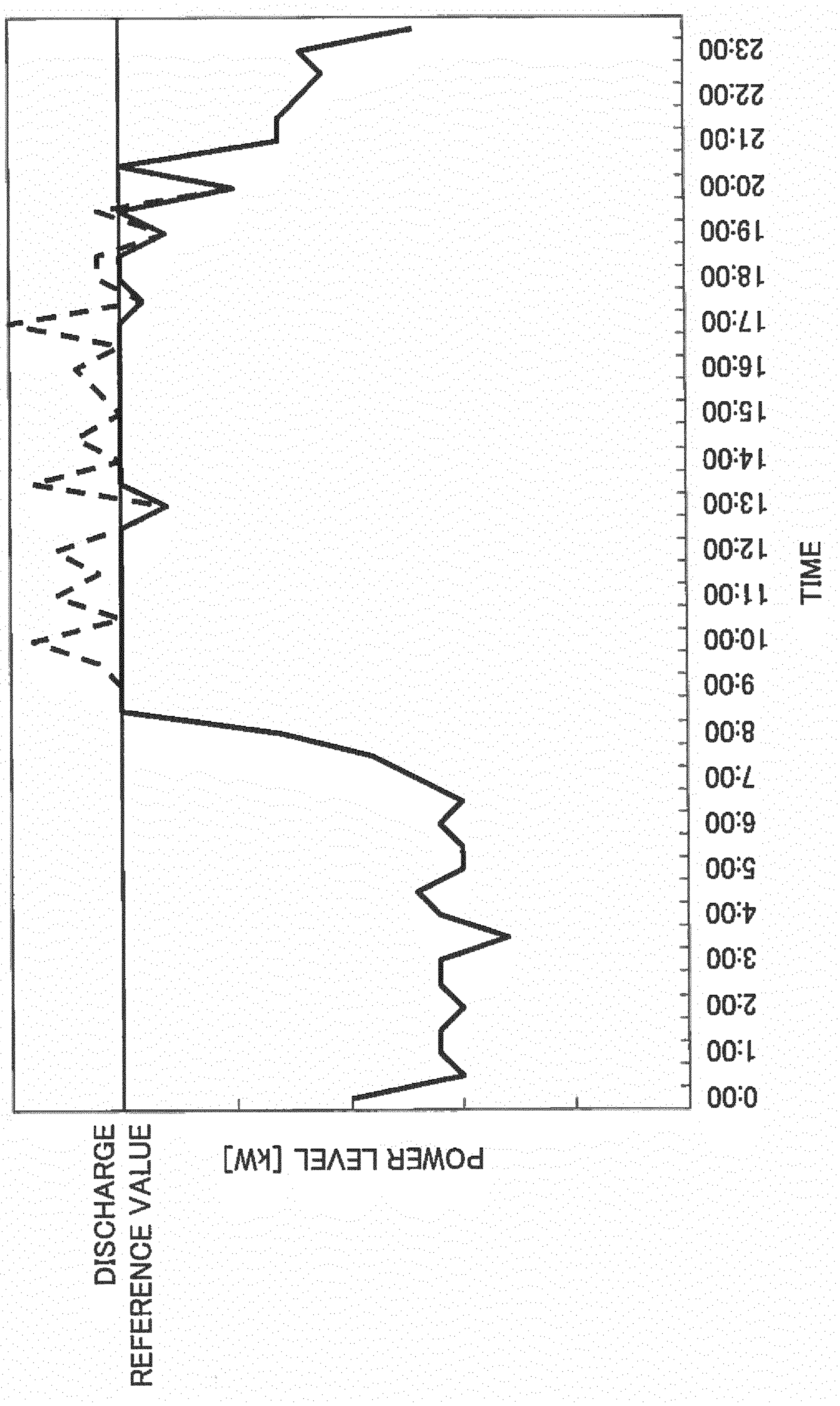
POWER LEVEL [kW]
DISCHARGE
REFERENCE VALUE
TIME
0:00
1:00
2:00
3:00
4:00
5:00
6:00
7:00
8:00
9:00
10:00
11:00
12:00
13:00
14:00
15:00
16:00
17:00
18:00
19:00
20:00
21:00
22:00
23:00

FIG.2

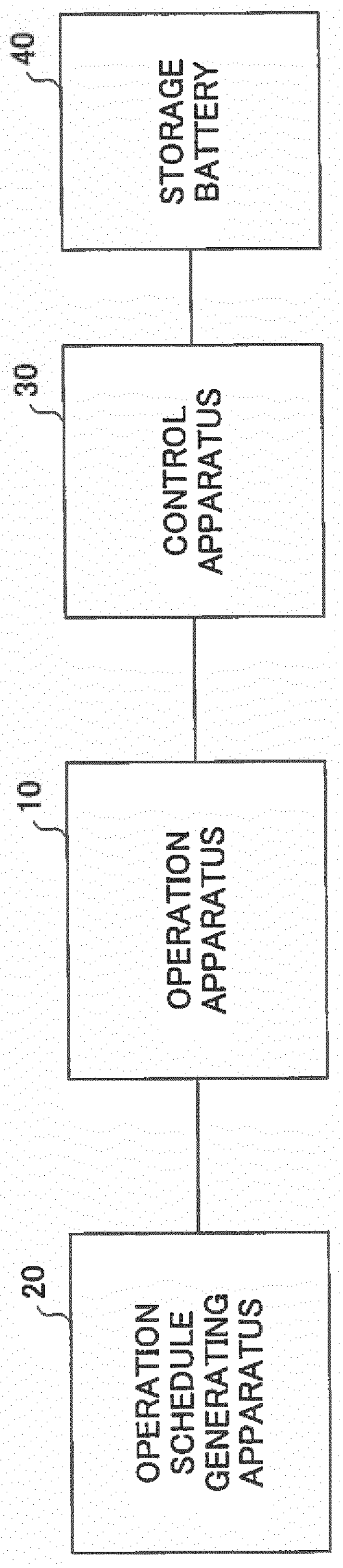
40
STORAGE BATTERY
30
CONTROL APPARATUS
10
OPERATION APPARATUS
20
OPERATION SCHEDULE GENERATING APPARATUS

FIG.3

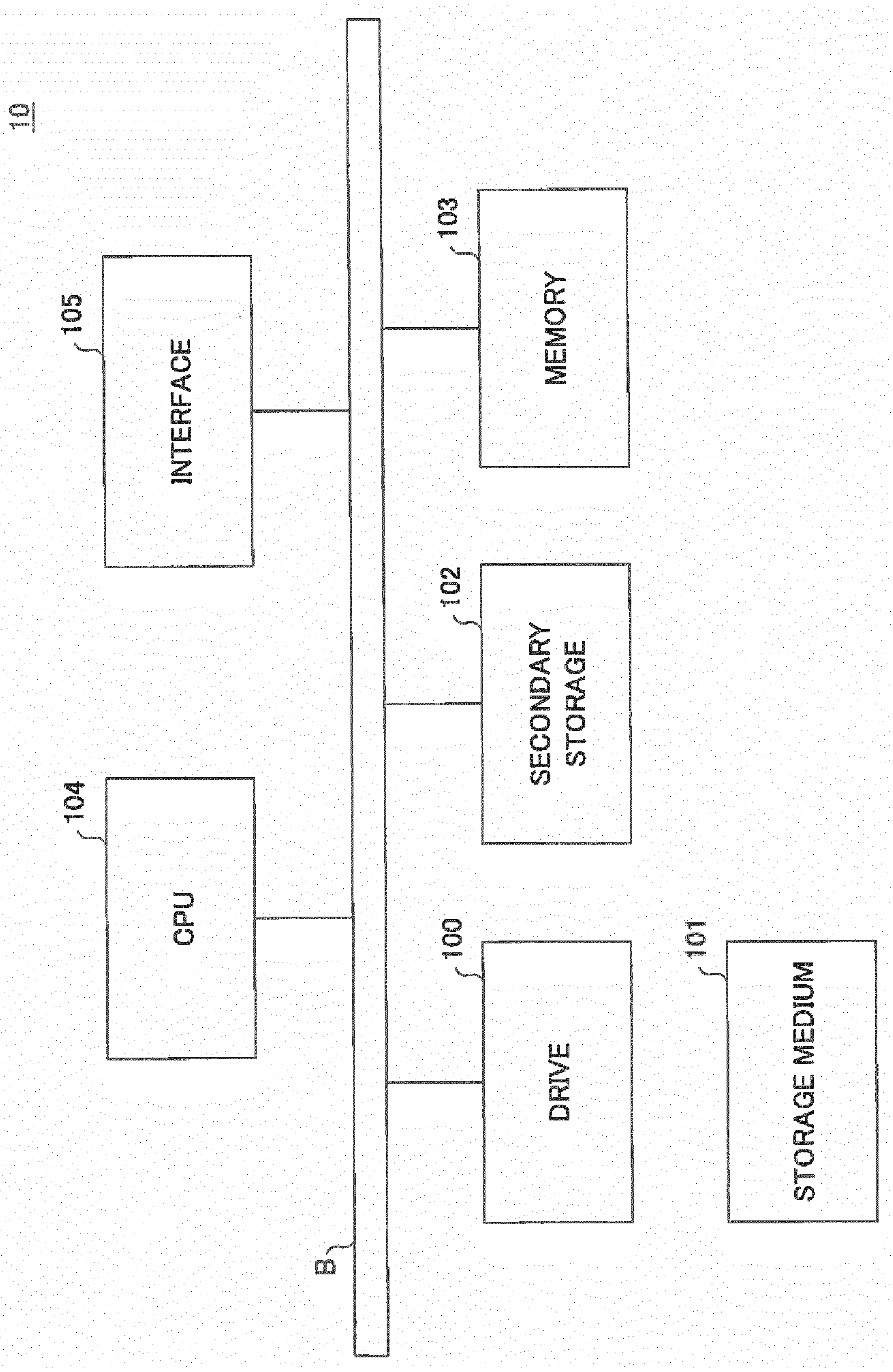
10
105
INTERFACE
103
MEMORY
104
CPU
102
SECONDARY STORAGE
100
DRIVE
101
STORAGE MEDIUM
B

FIG.4

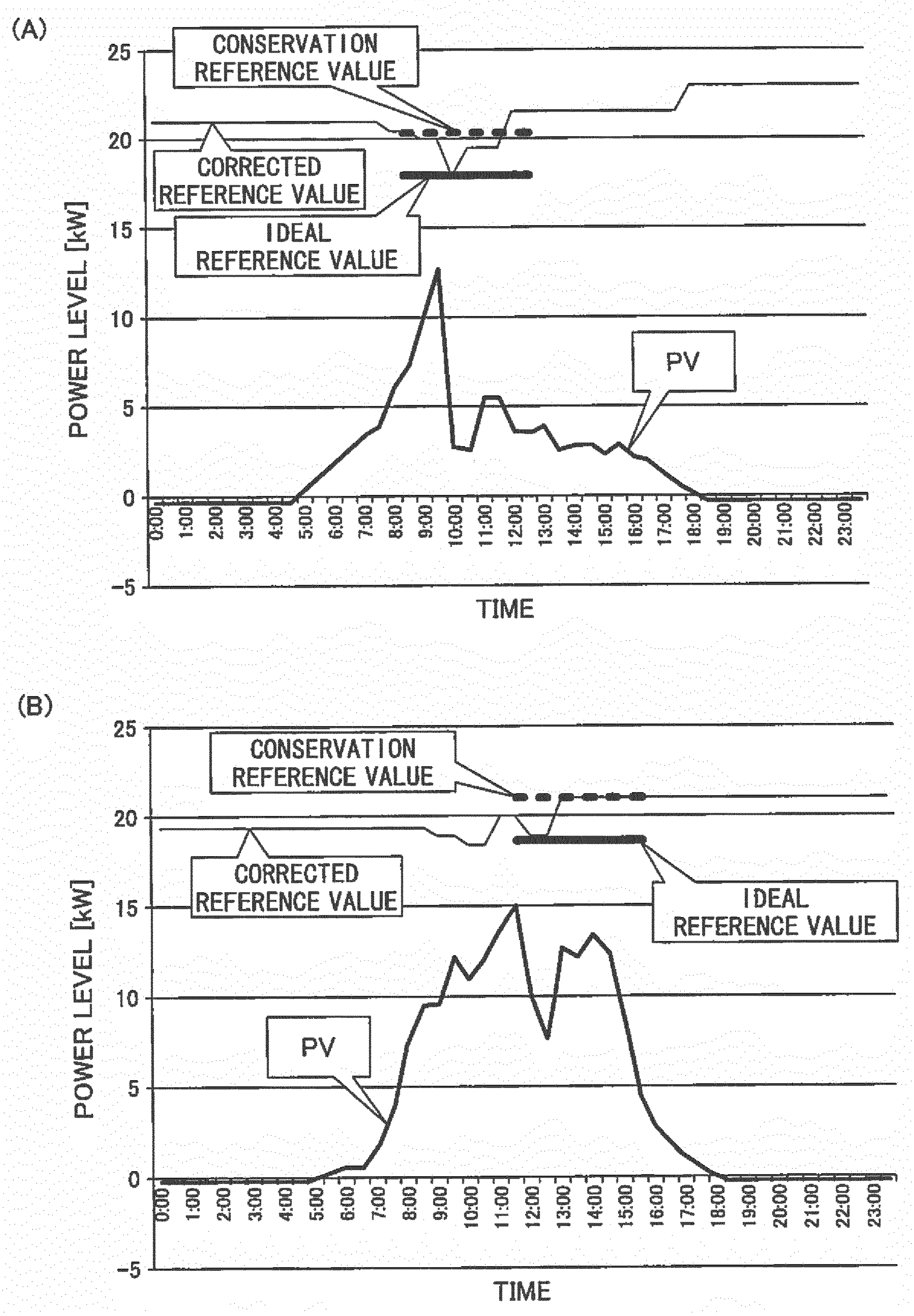
(A)
CONSERVATION REFERENCE VALUE
CORRECTED REFERENCE VALUE
IDEAL REFERENCE VALUE
PV
POWER LEVEL [kW]
25
20
15
10
5
0
-5
0:00
1:00
2:00
3:00
4:00
5:00
6:00
7:00
8:00
9:00
10:00
11:00
12:00
13:00
14:00
15:00
16:00
17:00
18:00
19:00
20:00
21:00
22:00
23:00
TIME
(B)
CONSERVATION REFERENCE VALUE
CORRECTED REFERENCE VALUE
IDEAL REFERENCE VALUE
PV
POWER LEVEL [kW]
25
20
15
10
5
0
-5
0:00
1:00
2:00
3:00
4:00
5:00
6:00
7:00
8:00
9:00
10:00
11:00
12:00
13:00
14:00
15:00
16:00
17:00
18:00
19:00
20:00
21:00
22:00
23:00
TIME

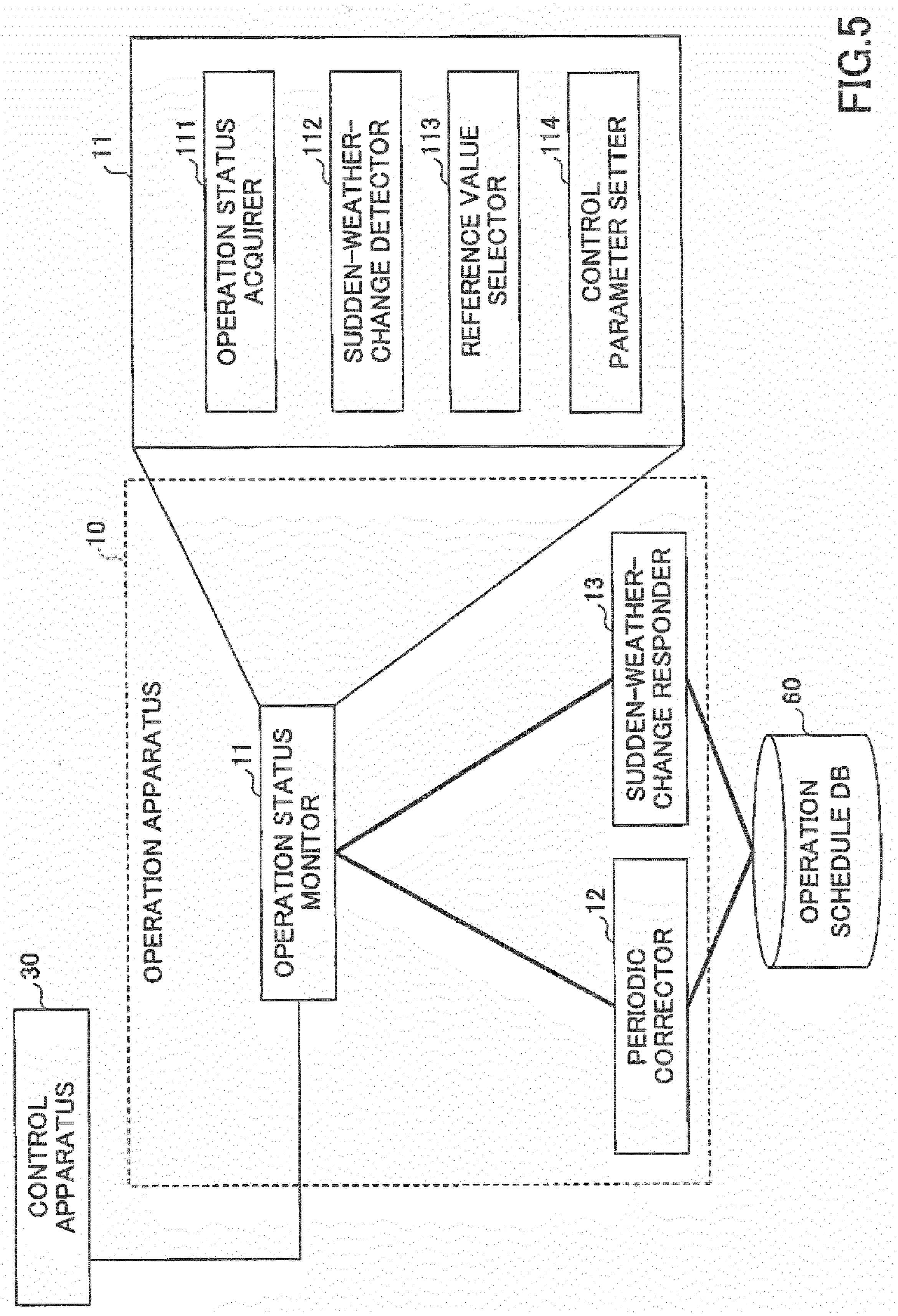
11
111 OPERATION STATUS ACQUIRER
112 SUDDEN-WEATHER-CHANGE DETECTOR
113 REFERENCE VALUE SELECTOR
114 CONTROL PARAMETER SETTER
10
OPERATION APPARATUS
11 OPERATION STATUS MONITOR
13 SUDDEN-WEATHER-CHANGE RESPONDER
12 PERIODIC CORRECTOR
60 OPERATION SCHEDULE DB
30 CONTROL APPARATUS

FIG.5

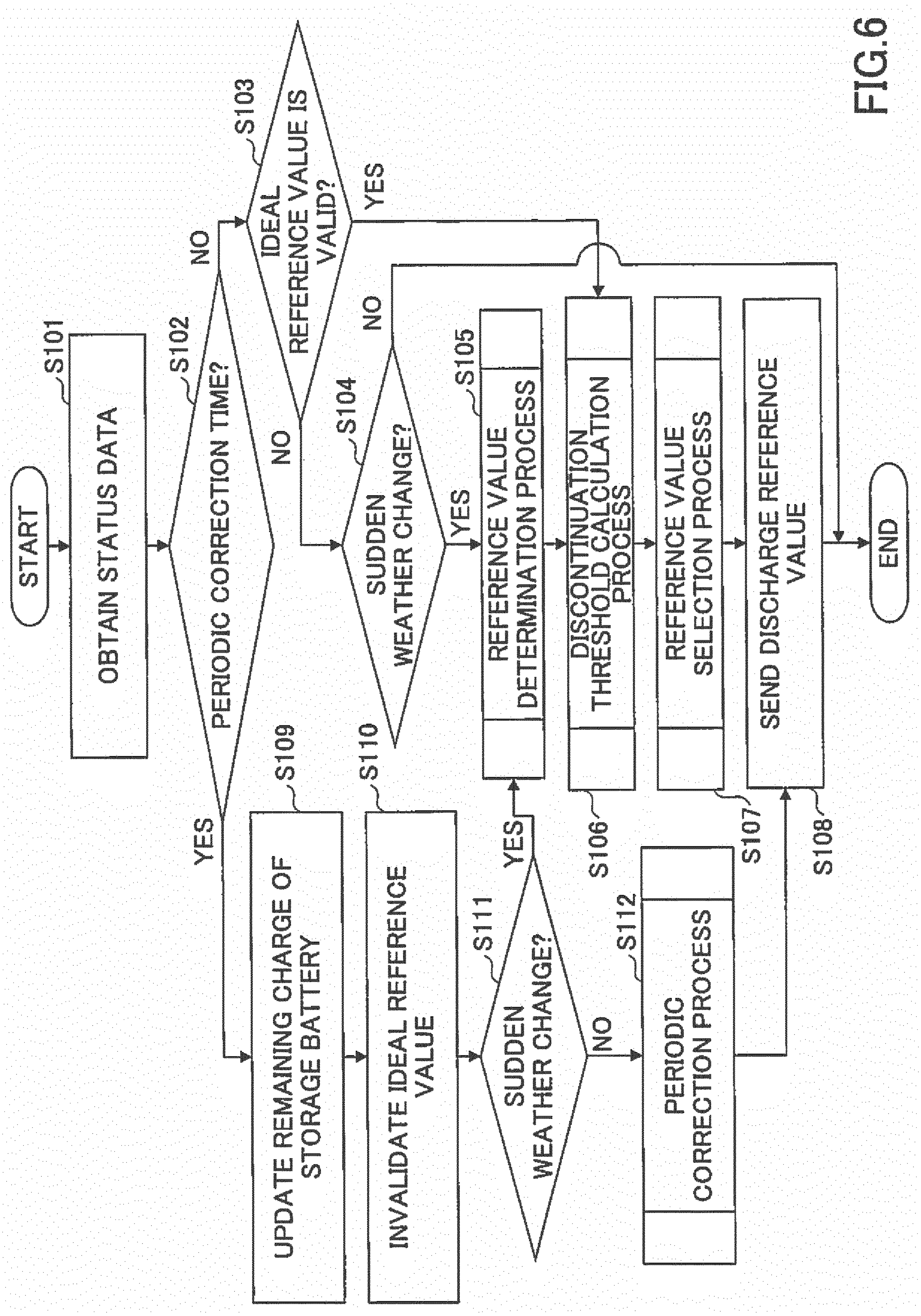
START
S101
OBTAIN STATUS DATA
S102
PERIODIC CORRECTION TIME?
NO
YES
S103
IDEAL REFERENCE VALUE IS VALID?
YES
NO
S104
SUDDEN WEATHER CHANGE?
YES
NO
S105
REFERENCE VALUE DETERMINATION PROCESS
DISCONTINUATION THRESHOLD CALCULATION PROCESS
S106
REFERENCE VALUE SELECTION PROCESS
S107
SEND DISCHARGE REFERENCE VALUE
S108
END
S109
UPDATE REMAINING CHARGE OF STORAGE BATTERY
S110
INVALIDATE IDEAL REFERENCE VALUE
S111
SUDDEN WEATHER CHANGE?
YES
NO
S112
PERIODIC CORRECTION PROCESS

FIG.6

FIG.7

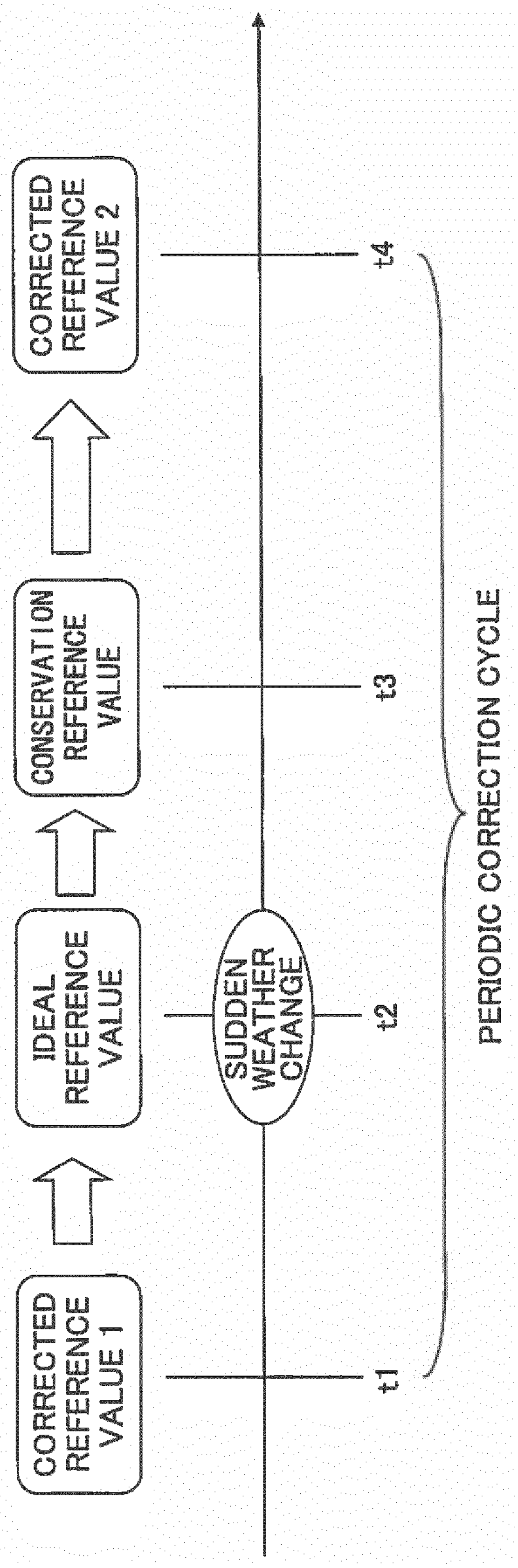
CORRECTED REFERENCE VALUE 1
IDEAL REFERENCE VALUE
CONSERVATION REFERENCE VALUE
CORRECTED REFERENCE VALUE 2
SUDDEN WEATHER CHANGE
t1
t2
t3
t4
PERIODIC CORRECTION CYCLE

FIG.8

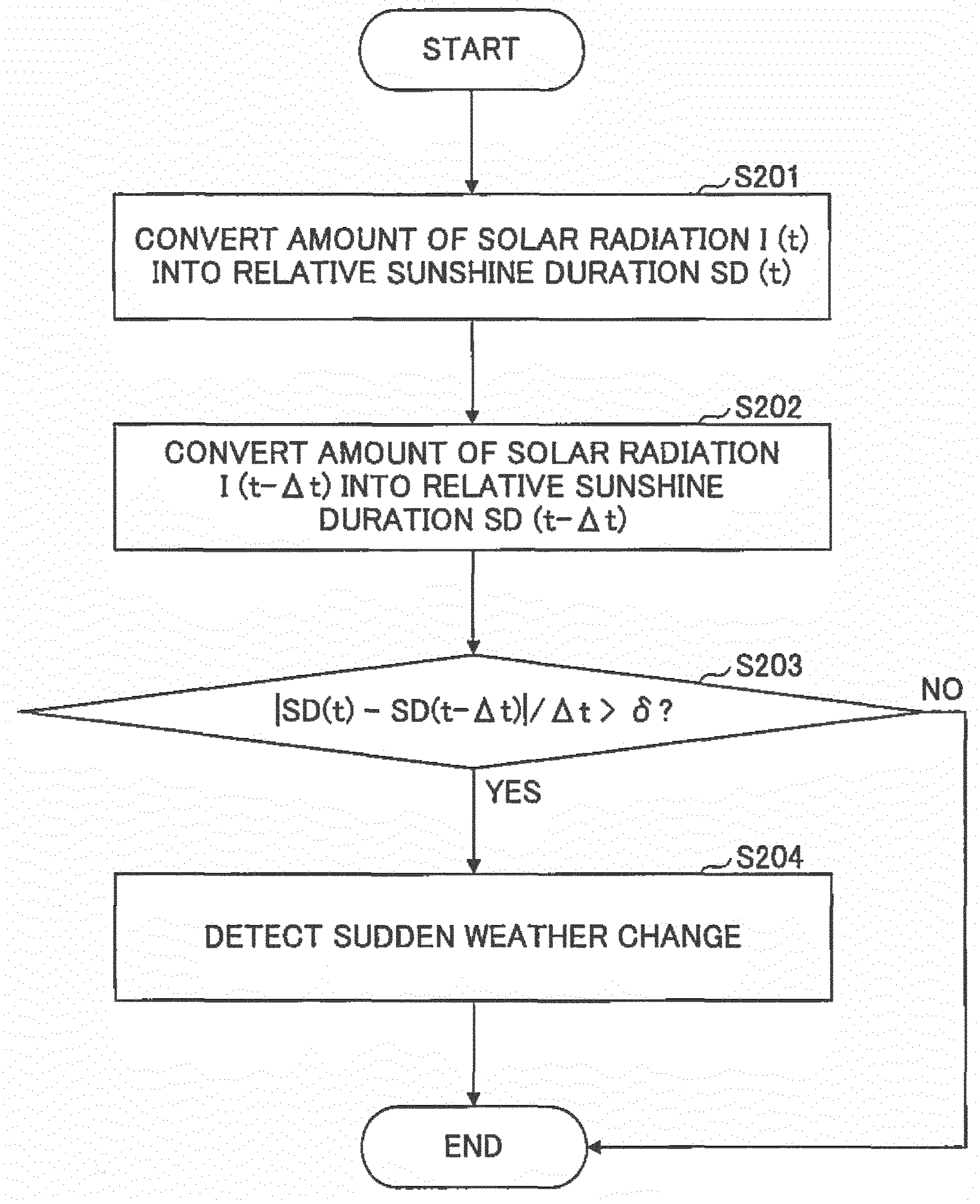
START
S201
CONVERT AMOUNT OF SOLAR RADIATION I (t) INTO RELATIVE SUNSHINE DURATION SD (t)
S202
CONVERT AMOUNT OF SOLAR RADIATION I (t-Δt) INTO RELATIVE SUNSHINE DURATION SD (t-Δt)
S203
|SD(t) - SD(t-Δt)|/Δt > δ?
NO
YES
S204
DETECT SUDDEN WEATHER CHANGE
END

FIG.9

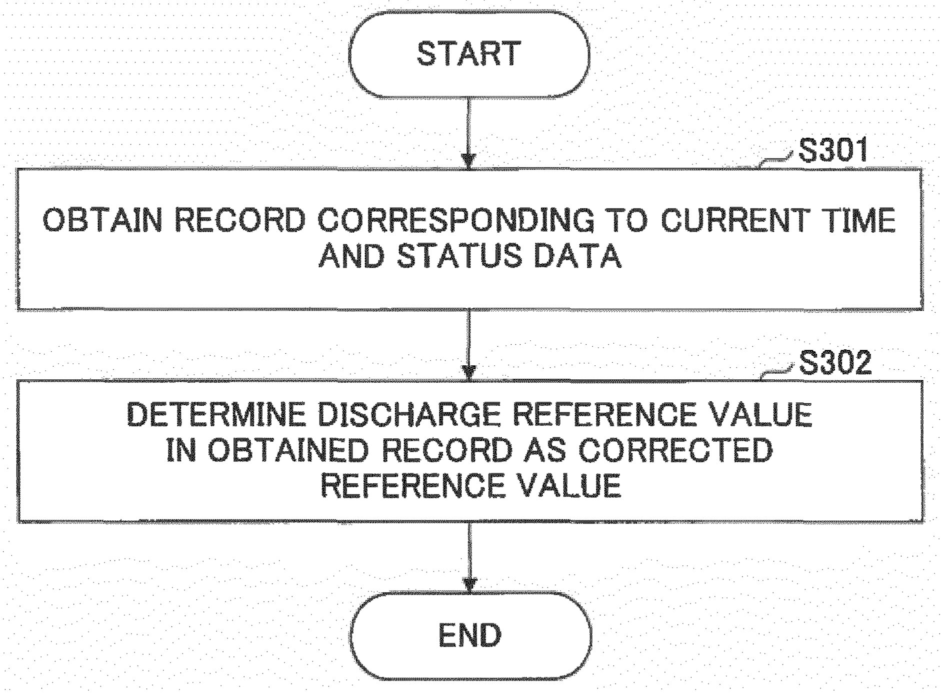
START
S301
OBTAIN RECORD CORRESPONDING TO CURRENT TIME AND STATUS DATA
S302
DETERMINE DISCHARGE REFERENCE VALUE IN OBTAINED RECORD AS CORRECTED REFERENCE VALUE
END

FIG.10

60

| MONTH | TIME | REMAINING CHARGE OF STORAGE BATTERY (%) | AMOUNT OF SOLAR RADIATION (kWh) | RELATIVE SUNSHINE DURATION | DISCHARGE REFERENCE VALUE (kW) |
|---|---|---|---|---|---|
| 7 | 8:00 | 50 | 0.217 | 1.0 | 19 |
| ⋮ | ⋮ | ⋮ | ⋮ | ⋮ | ⋮ |
| 7 | 15:00 | 20 | 0.344 | 1.0 | 23.5 |
| ⋮ | ⋮ | ⋮ | ⋮ | ⋮ | ⋮ |

FIG.11

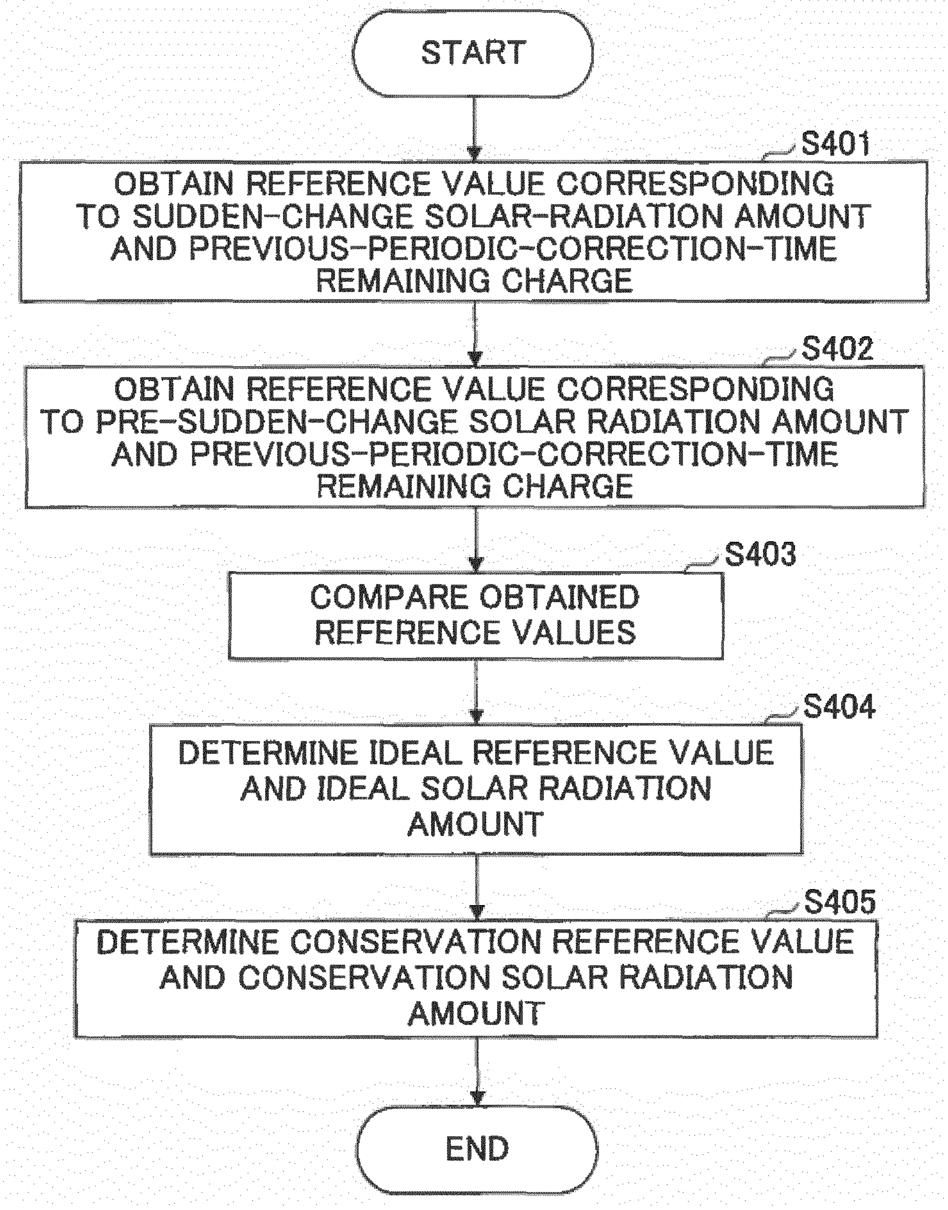
START
S401
OBTAIN REFERENCE VALUE CORRESPONDING TO SUDDEN-CHANGE SOLAR-RADIATION AMOUNT AND PREVIOUS-PERIODIC-CORRECTION-TIME REMAINING CHARGE
S402
OBTAIN REFERENCE VALUE CORRESPONDING TO PRE-SUDDEN-CHANGE SOLAR RADIATION AMOUNT AND PREVIOUS-PERIODIC-CORRECTION-TIME REMAINING CHARGE
S403
COMPARE OBTAINED REFERENCE VALUES
S404
DETERMINE IDEAL REFERENCE VALUE AND IDEAL SOLAR RADIATION AMOUNT
S405
DETERMINE CONSERVATION REFERENCE VALUE AND CONSERVATION SOLAR RADIATION AMOUNT
END

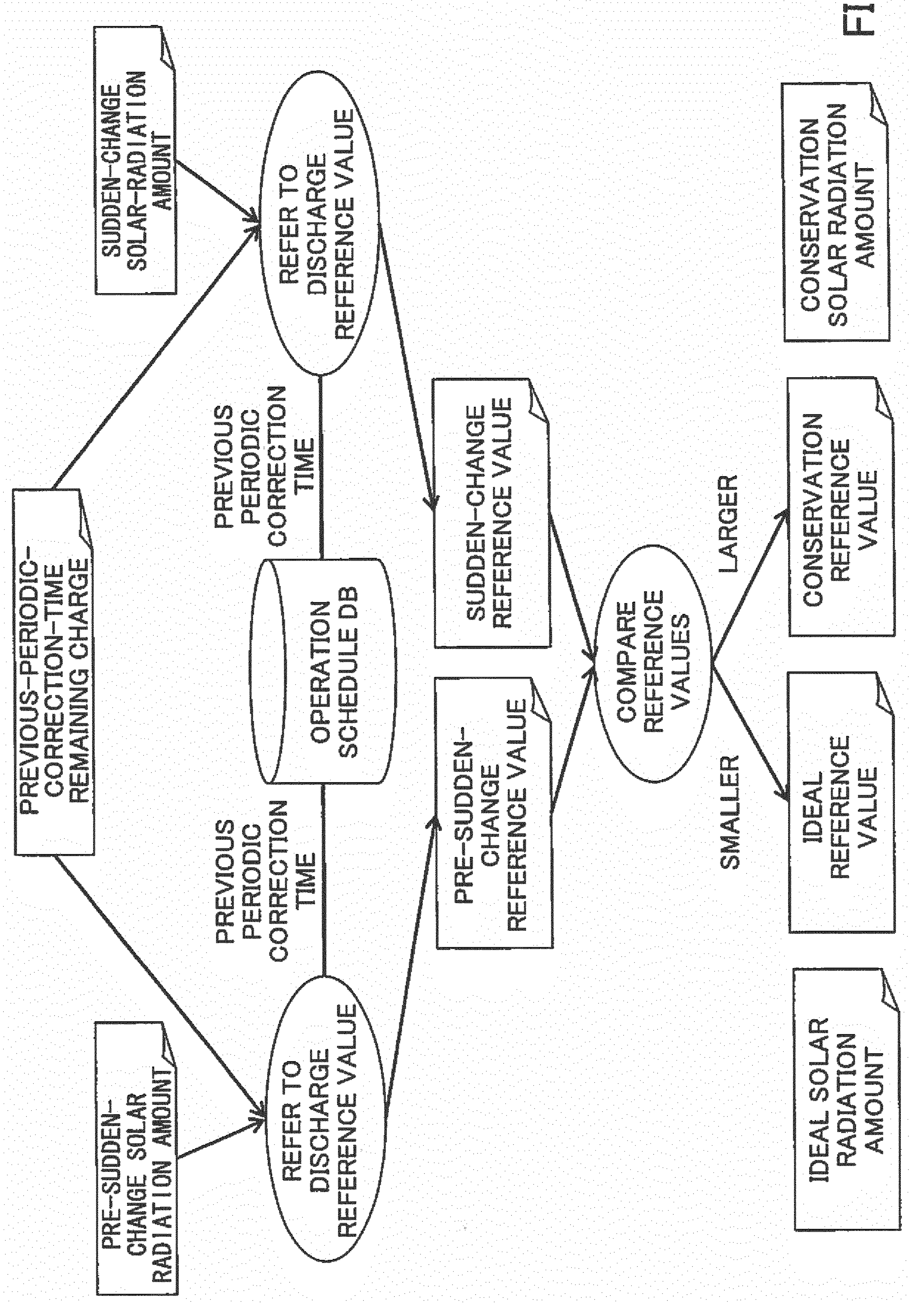
SUDDEN-CHANGE SOLAR-RADIATION AMOUNT
REFER TO DISCHARGE REFERENCE VALUE
PREVIOUS-PERIODIC-CORRECTION-TIME REMAINING CHARGE
PREVIOUS PERIODIC CORRECTION TIME
OPERATION SCHEDULE DB
PREVIOUS PERIODIC CORRECTION TIME
PRE-SUDDEN-CHANGE SOLAR RADIATION AMOUNT
REFER TO DISCHARGE REFERENCE VALUE
SUDDEN-CHANGE REFERENCE VALUE
PRE-SUDDEN-CHANGE REFERENCE VALUE
COMPARE REFERENCE VALUES
LARGER
SMALLER
CONSERVATION SOLAR RADIATION AMOUNT
CONSERVATION REFERENCE VALUE
IDEAL REFERENCE VALUE
IDEAL SOLAR RADIATION AMOUNT

FIG.12

FIG.13

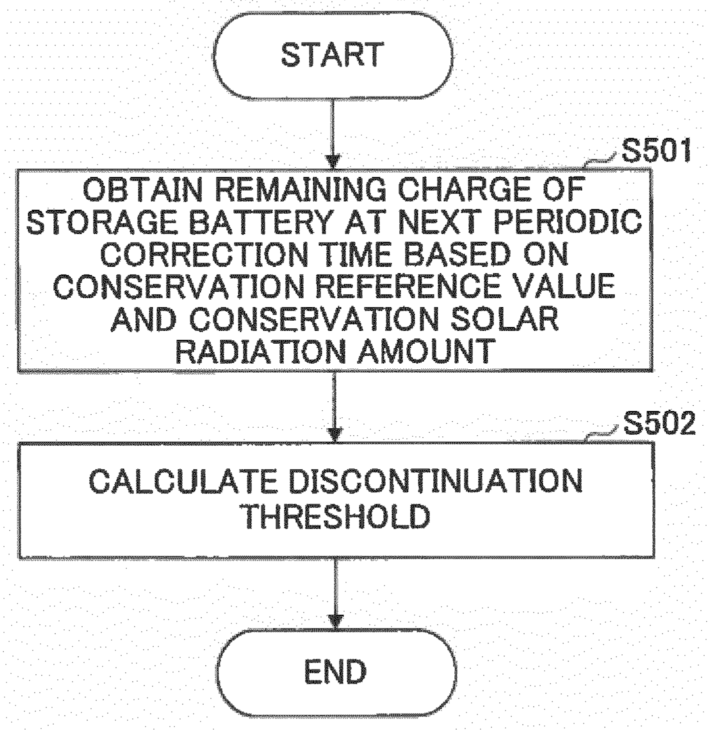
START
S501
OBTAIN REMAINING CHARGE OF STORAGE BATTERY AT NEXT PERIODIC CORRECTION TIME BASED ON CONSERVATION REFERENCE VALUE AND CONSERVATION SOLAR RADIATION AMOUNT
S502
CALCULATE DISCONTINUATION THRESHOLD
END

FIG.14

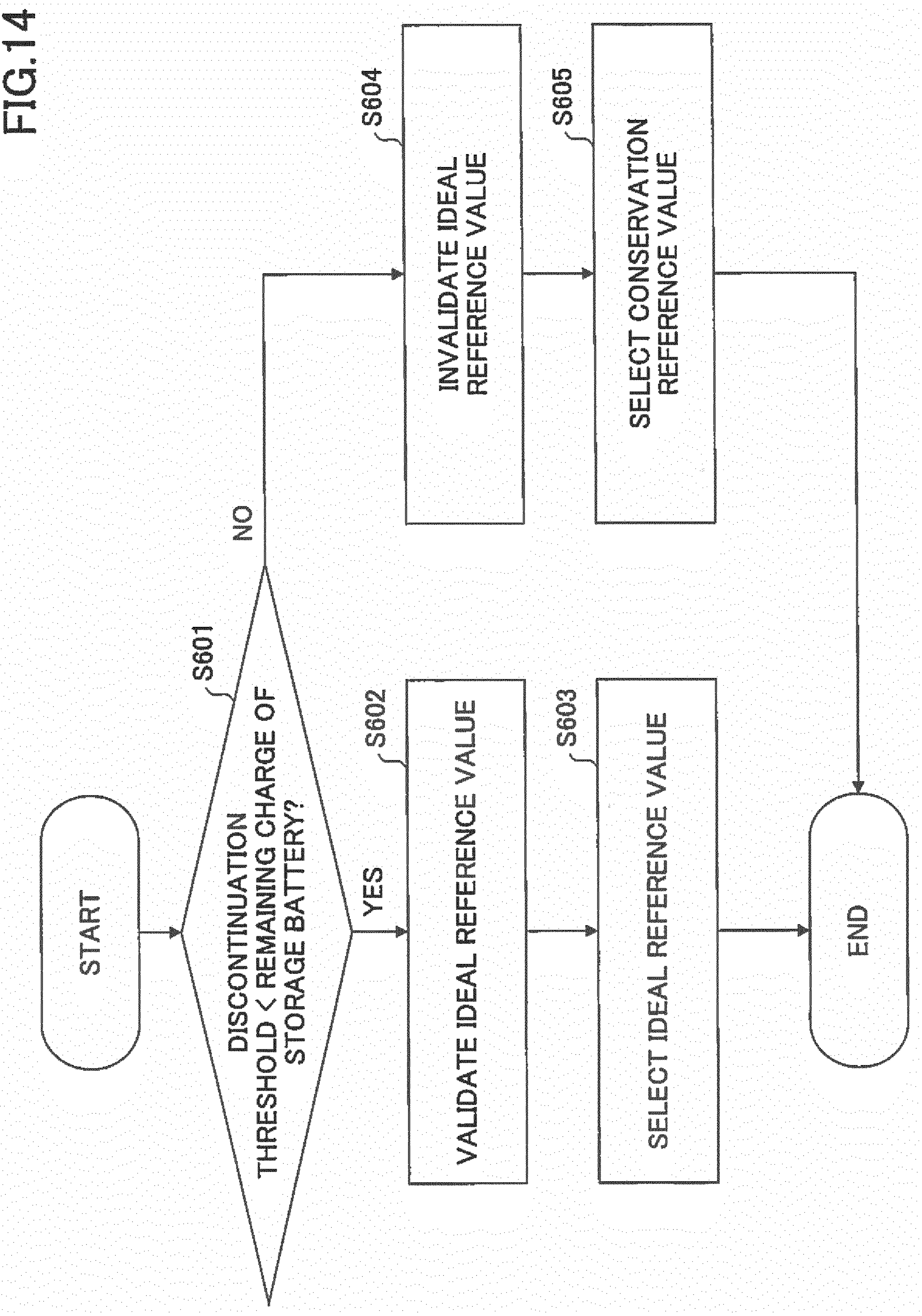
START
S601
DISCONTINUATION THRESHOLD < REMAINING CHARGE OF STORAGE BATTERY?
YES
NO
S602
VALIDATE IDEAL REFERENCE VALUE
S603
SELECT IDEAL REFERENCE VALUE
S604
INVALIDATE IDEAL REFERENCE VALUE
S605
SELECT CONSERVATION REFERENCE VALUE
END

**INTERNATIONAL SEARCH REPORT**

International application No. PCT/JP2013/074212

A. CLASSIFICATION OF SUBJECT MATTER
*H02J7/35*(2006.01)i

According to International Patent Classification (IPC) or to both national classification and IPC

B. FIELDS SEARCHED

Minimum documentation searched (classification system followed by classification symbols)
H02J7/00, H02J3/00, H02J1/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2012/127585 A1 (Fujitsu Ltd.), 27 September 2012 (27.09.2012), entire text; all drawings (Family: none) | 1-9 |
| A | JP 2009-284586 A (Nippon Telegraph and Telephone Corp.), 03 December 2009 (03.12.2009), entire text; all drawings (Family: none) | 1-9 |

☐ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 13 November, 2013 (13.11.13) | 26 November, 2013 (26.11.13) |
| Name and mailing address of the ISA/ Japanese Patent Office | Authorized officer |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H08308104 B
- JP 2013005630 A
- JP 2002369407 A
- WO 2012127585 A


### Non-patent literature cited in the description


- **MITSURU KUDO ; AKIRA TAKEUCHI ; YOUSUKE NOZAKI ; HISAHITO ENDO ; JIRO SUMITA.** Forecasting Electric Power Generation of Photovoltaic Power System for Energy Network. *IEEJ Transactions on Power and Energy,* 2007, vol. 127 (7), 847-853
- **SATOSHI TAKAYAMA ; YUJI IWASAKA ; RYOICHI HARA ; HIROYUKI KITA ; TAKAMITSU ITO ; YOSHINOBU UEDA ; SHUYA MIWA ; NAOYA MATSUNO ; KATSUYUKI TAKITANI ; KOJI YAMAGUCHI.** A Study on the Scheduling of Large-Scaled PV Power Station Output based on Solar Radiation Forecast. *IEEJ Transactions on Power and Energy,* 2009, vol. 129 (12), 1514-1521